# EUROPEAN PATENT APPLICATION

(11) **EP 4 822 499 A1**
(43) Date of publication of application: **14.10.2026**
(21) Application number: 26167767.8
(22) Date of filing: 25.03.2026
(51) Int. Cl.: G06F 3/041, G06F 3/044, G06F 3/046

(54) **ELECTRONIC DEVICE**

(30) Priority: 09.04.2025 KR 20250046072
(71) Applicant: Samsung Display Co., Ltd., Yongin-si, Gyeonggi-do (KR)
(72) Inventor: HAN, Jeongyun, Yongin-si (KR); NAM, Hayeong, Yongin-si (KR); LEE, Jongmin, Yongin-si (KR)
(74) Representative: Marks & Clerk LLP

(57) **Abstract**

An electronic device includes: a sensor layer including a sensing area, and a peripheral area adjacent to the sensing area; and a sensor driver to drive the sensor layer. The sensor layer includes: a first electrode extending in a first direction, and including a concave portion; a second electrode crossing the first electrode, extending in a second direction crossing the first direction, and including a protruding portion protruding to engage with the concave portion; a third electrode overlapping with a portion of the first electrode, and not overlapping with the concave portion and the protruding portion; and a fourth electrode overlapping with a portion of the second electrode, and not overlapping with the concave portion and the protruding portion.

## Description

### BACKGROUND

### 1. Field

Aspects of embodiments of the present disclosure relate to an electronic device having improved touch performance.

### 2. Description of the Related Art

Multimedia electronic devices, such as televisions, mobile phones, tablet computers, notebook computers, navigation units, and game units, include a display device to display images. The electronic devices include a sensor layer (e.g., an input sensor) that provides a touch-based input method allowing users to easily and intuitively input information or commands, in addition to general input methods, such as a button, a keyboard, a mouse, and/or the like. The sensor layer senses a touch or pressure generated by a user. Further, there is a growing demand for the use of pens for users who are accustomed to inputting information using writing tools, or for specific applications (e.g., applications for sketching or drawing) that require or desire a more precise touch input.

The above information disclosed in this Background section is for enhancement of understanding of the background of the present disclosure, and therefore, it may contain information that does not constitute prior art.

### SUMMARY

Embodiments of the present disclosure may be directed to an electronic device having improved touch performance.

According to one or more embodiments of the present disclosure, an electronic device includes: a sensor layer including a sensing area, and a peripheral area adjacent to the sensing area; and a sensor driver configured to drive the sensor layer. The sensor layer includes: a first electrode extending in a first direction, and including a concave portion; a second electrode crossing the first electrode, extending in a second direction crossing the first direction, and including a protruding portion protruding to engage with the concave portion; a third electrode overlapping with a portion of the first electrode, and not overlapping with the concave portion and the protruding portion; and a fourth electrode overlapping with a portion of the second electrode, and not overlapping with the concave portion and the protruding portion.

In an embodiment, the concave portion may include a plurality of concave portions, and the protruding portion may include a plurality of protruding portions. The plurality of concave portions may include a plurality of first concave portions recessed in the first direction, and a plurality of second concave portions recessed in a direction opposite to the first direction. The plurality of protruding portions may include a plurality of first protruding portions protruding to engage with the plurality of first concave portions, and a plurality of second protruding portions protruding to engage with the plurality of second concave portions.

In an embodiment, a number of the plurality of first concave portions may be greater than a number of the plurality of second concave portions.

In an embodiment, a maximum width in the second direction of each of the plurality of first concave portions may be smaller than a maximum width in the second direction of each of the plurality of second concave portions.

In an embodiment, each of the plurality of second concave portions may be located between two first concave portions adjacent to each other among the plurality of first concave portions.

In an embodiment, a number of the plurality of first concave portions may be equal to a number of the plurality of second concave portions.

In an embodiment, a maximum width in the second direction of each of the plurality of first concave portions may be equal to a maximum width in the second direction of each of the plurality of second concave portions.

In an embodiment, the sensor layer may further include a plurality of dummy patterns overlapping with the concave portion and the protruding portion.

In an embodiment, a boundary line between the concave portion and the protruding portion may overlap with at least a portion of a plurality of dummy boundary lines between the plurality of dummy patterns.

In an embodiment, the sensor layer may further include a plurality of boundary dummy patterns between the concave portion and the protruding portion.

In an embodiment, each of the plurality of boundary dummy patterns may include a reference line extending in a direction, and a protruding line crossing the reference line and protruding from the reference line.

In an embodiment, the sensor layer may further include a plurality of dummy patterns overlapping with the concave portion, the protruding portion, and the plurality of boundary dummy patterns. A first boundary line between the concave portion and the plurality of boundary dummy patterns and a second boundary line between the protruding portion and the plurality of boundary dummy patterns may overlap with at least a portion of a plurality of dummy boundary lines between the plurality of dummy patterns.

In an embodiment, the first electrode may further include a plurality of first patterns spaced from each other in the first direction and including the concave portion, and a first bridge pattern electrically connected to the plurality of first patterns. The fourth electrode may include a plurality of second patterns spaced from each other in the second direction, and a second bridge pattern electrically connected to the plurality of second patterns. The third electrode, the plurality of second patterns, and the first bridge pattern may be located in a first layer. The plurality of first patterns, the second electrode, and the second bridge pattern may be located in a second layer different from the first layer.

In an embodiment, the sensor layer may further include: a plurality of first dummy patterns overlapping with the third electrode, and surrounded around by the first electrode; and a plurality of second dummy patterns overlapping with the fourth electrode, and surrounded around by the second electrode.

According to one or more embodiments of the present disclosure, an electronic device includes: a sensor layer including a sensing area, and a peripheral area adjacent to the sensing area; and a processor configured to control an operation of the sensor layer. The sensor layer includes: a first electrode including a plurality of concave portions; and a second electrode crossing the first electrode, and including a plurality of protruding portions protruding to engage with the plurality of concave portions. The plurality of concave portions includes a plurality of first concave portions recessed in a first direction, and a plurality of second concave portions recessed in a direction opposite to the first direction. The plurality of protruding portions includes a plurality of first protruding portions protruding to engage with the plurality of first concave portions, and a plurality of second protruding portions protruding to engage with the plurality of second concave portions.

In an embodiment, the sensor layer may further include a plurality of dummy patterns overlapping with the plurality of concave portions and the plurality of protruding portions, and a plurality of boundary lines between the plurality of concave portions and the plurality of protruding portions may overlap with at least a portion of a plurality of dummy boundary lines between the plurality of dummy patterns.

In an embodiment, the sensor layer may further include a plurality of boundary dummy patterns between the plurality of concave portions and the plurality of protrusion portions.

In an embodiment, a plurality of first boundary lines between the plurality of concave portions and the plurality of boundary dummy patterns and a plurality of second boundary lines between the plurality of protruding portions and the plurality of boundary dummy patterns may overlap with at least a portion of the dummy boundary lines between the plurality of dummy patterns.

In an embodiment, a number of the plurality of first concave portions may be greater than a number of the plurality of second concave portions.

In an embodiment, a number of the plurality of first concave portions may be equal to a number of the plurality of second concave portions.

According to some embodiments, a first electrode and a second electrode may respectively include concave portions and protruding portions protruding to engage with the concave portions in areas that do not overlap with a third electrode and a fourth electrode. In this case, as an engaged area between the first electrode and the second electrode becomes larger, an effective coupling area between the first electrode and the second electrode may increase, and variations in a capacitance between the first electrode and the second electrode may increase.

According to some embodiments, because the first electrode and the second electrode respectively include the concave portions and the protruding portions in the areas that do not overlap with the third electrode and the fourth electrode, an undesired parasitic capacitance may be prevented or substantially prevented from occurring between each of the first electrode and the second electrode and each of the third electrode and the fourth electrode. Accordingly, an electronic device having improved pen sensitivity and touch sensitivity may be provided.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 is a block diagram of an electronic device according to an embodiment of the present disclosure;
FIG. 2A is a front perspective view of an electronic device according to an embodiment of the present disclosure;
FIG. 2B is a rear perspective view of an electronic device according to an embodiment of the present disclosure;
FIG. 3 is a perspective view of an electronic device according to an embodiment of the present disclosure;
FIG. 4 is a perspective view of an electronic device according to an embodiment of the present disclosure;
FIG. 5 is a cross-sectional view of a display panel according to an embodiment of the present disclosure;
FIG. 6 is a schematic view illustrating an operation of an electronic device according to an embodiment of the present disclosure;
FIG. 7A is a cross-sectional view of a display panel according to an embodiment of the present disclosure;
FIG. 7B is a cross-sectional view of some components of a sensor layer according to an embodiment of the present disclosure;
FIG. 8 is a plan view of a sensor layer according to an embodiment of the present disclosure;
FIG. 9A is a plan view of a first conductive layer of a sensing unit according to an embodiment of the present disclosure;
FIG. 9B is a plan view of a second conductive layer of a sensing unit according to an embodiment of the present disclosure;
FIG. 10 is an enlarged plan view of the area AA' shown in FIG. 9B;
FIG. 11 is an enlarged plan view of the area BB' shown in FIG. 9B;
FIG. 12 is a plan view of a structure in which a first conductive layer and a second conductive layer of a sensing unit overlap with each other according to an embodiment of the present disclosure;
FIG. 13 is a plan view of a second conductive layer of a sensing unit according to an embodiment of the present disclosure;
FIG. 14A is a plan view of a second conductive layer of a sensing unit according to an embodiment of the present disclosure;
FIG. 14B is a plan view of a second conductive layer of a sensing unit according to an embodiment of the present disclosure;
FIG. 15A is a plan view of a second conductive layer of a sensing unit according to an embodiment of the present disclosure;
FIG. 15B is a plan view of a second conductive layer of a sensing unit according to an embodiment of the present disclosure;
FIG. 16 is a schematic view illustrating an operation of a sensor driver according to an embodiment of the present disclosure;
FIG. 17 is a schematic view illustrating an operation of a sensor driver according to an embodiment of the present disclosure;
FIG. 18 is a schematic view illustrating a first mode according to an embodiment of the present disclosure;
FIG. 19 is a schematic view illustrating a second mode according to an embodiment of the present disclosure;
FIG. 20A is a graph illustrating a waveform of a first signal according to an embodiment of the present disclosure;
FIG. 20B is a graph illustrating a waveform of a second signal according to an embodiment of the present disclosure;
FIG. 21A is a schematic view illustrating a second mode according to an embodiment of the present disclosure; and
FIG. 21B is a schematic view illustrating a second mode with respect to one sensing unit according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another. It will also understood that directions depicted in the figures are example directions relative to a given device, and do not imply any particular orientation of that device.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure as defined in the claims.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

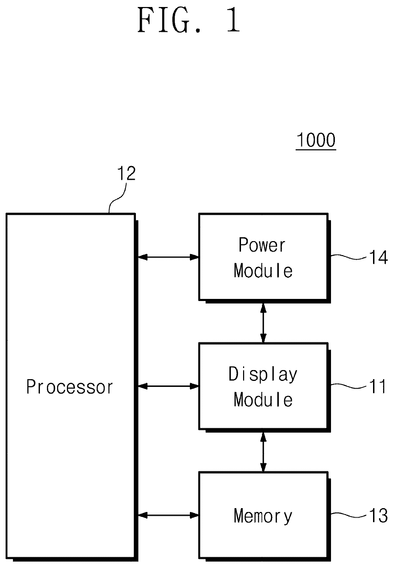

FIG. 1 is a block diagram of an electronic device 1000 according to an embodiment of the present disclosure.

Referring to FIG. 1, the electronic device 1000 may include a display module (e.g., a display or a touch-display) 11, a processor 12, a memory 13, and a power module (e.g., a power circuit) 14.

The display module 11 may display an image. The image may include a still image as well as a video. The processor 12 may include at least one of a central processing unit (CPU), an application processor (AP), a graphics processing unit (GPU), a communication processor (CP), an image signal processor (ISP), and/or a controller. The processor 11 may control an operation of the display module 11.

The memory 13 may store data information used for the operation of the processor 12 or the display module 11. When the processor 12 executes an application stored in the memory 13, an image data signal and/or an input control signal may be transmitted to the display module 11, and the display module 11 may process the received signals to output image information through a display screen.

The power module 14 may include a power supply module (e.g., a power supply or a power supply circuit), such as a power adapter or a battery device, and a power conversion module (e.g., a power converter) that converts power supplied by the power supply module to generate power used for the operations of the electronic device 1000.

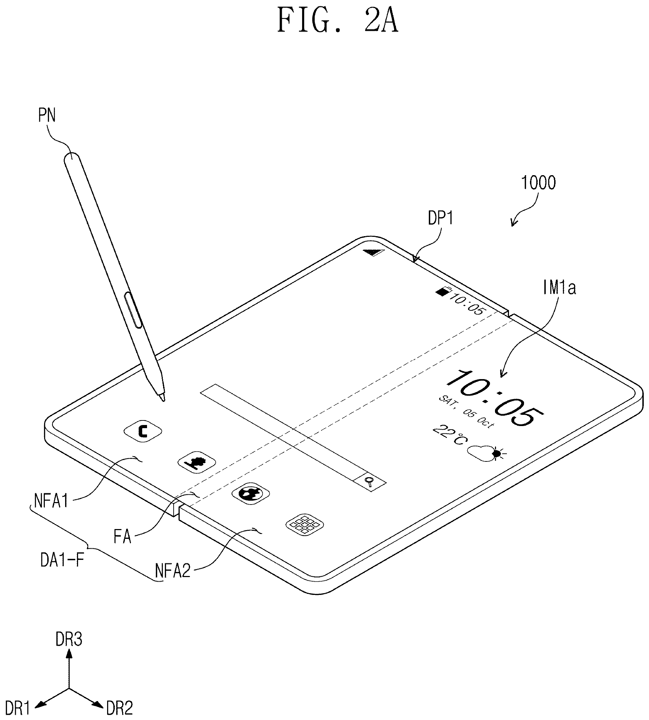

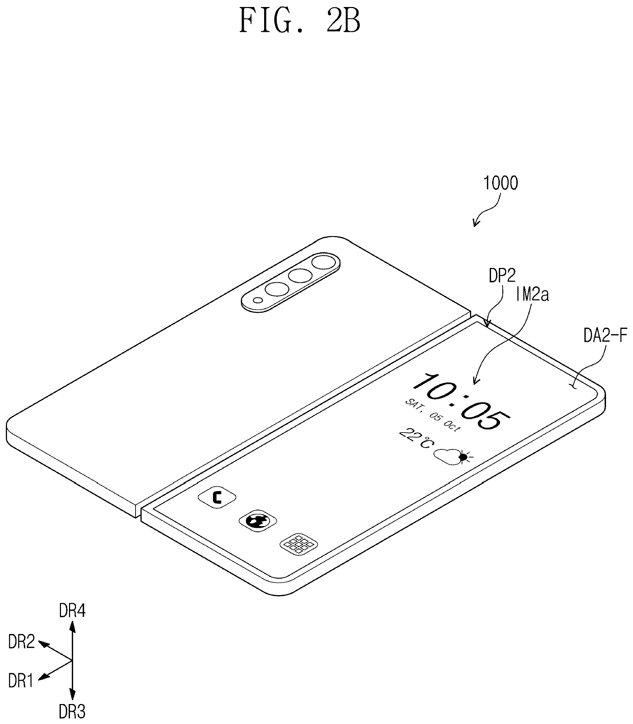

FIG. 2A is a front perspective view of the electronic device 1000 according to an embodiment of the present disclosure. FIG. 2B is a rear perspective view of the electronic device 1000 according to an embodiment of the present disclosure.

Referring to FIGS. 2A and 2B, the electronic device 1000 may be activated in response to electrical signals. As an example, the electronic device 1000 may display images, and may sense external inputs applied from the outside. The external input may be a user input. The user input may include a variety of suitable forms of external inputs, such as a part of user's body, a pen PN, light, heat, or pressure.

The electronic device 1000 may include a first display panel DP1 and a second display panel DP2. The first display panel DP1 and the second display panel DP2 may be panels separated from each other. The first display panel DP1 may be referred to as a main display panel, and the second display panel DP2 may be referred to as an auxiliary display panel or an external display panel.

The first display panel DP1 may include a first display part DA1-F, and the second display panel DP2 may include a second display part DA2-F. The second display panel DP2 may have a size smaller than a size of the first display panel DP1. Accordingly, corresponding to the sizes of the first display panel DP1 and the second display panel DP2, the first display part DA1-F may have a size greater than a size of the second display part DA2-F.

When the electronic device 1000 is in an unfolded state, the first display part DA1-F may include a plane that is parallel to or substantially parallel to each of a first direction DR1 and a second direction DR2. A thickness direction of the electronic device 1000 may be parallel to or substantially parallel to a third direction DR3 intersecting or crossing the first direction DR1 and the second direction DR2. Hereinafter, front (e.g., upper) and rear (e.g., lower) surfaces of each member of the electronic device 1000 may be defined based on the third direction DR3.

The first display panel DP1 or the first display part DA1-F may include a folding area FA that may be folded or unfolded, and a plurality of non-folding areas NFA1 and NFA2 spaced apart from each other with the folding area FA disposed between the non-folding areas NFA1 and NFA2. The second display panel DP2 may overlap with one of the non-folding areas NFA1 and/or NFA2. As an example, the second display panel DP2 may overlap with a first non-folding area NFA1.

A display direction of a first image IM1a displayed through the first display panel DP1 may be opposite to a display direction of a second image IM2a displayed through the second display panel DP2. As an example, the first image IM1a may be displayed to the third direction DR3, and the second image IM2a may be displayed to a fourth direction DR4 opposite to the third direction DR3.

The folding area FA may be folded with respect to a folding axis that extends in a direction parallel to or substantially parallel to long sides of the electronic device 1000 (e.g., a direction parallel to or substantially parallel to the first direction DR1). When the electronic device 1000 is in a folded state, the folding area FA may have a curvature and a radius of curvature. The electronic device 1000 may be inwardly folded (e.g., inner-folding), such that the first non-folding area NFA1 faces a second non-folding area NFA2, and the first display part DA1-F is not exposed to the outside.

According to an embodiment, the electronic device 1000 may be outwardly folded (e.g., outer-folding), such that the first display part DA1-F is exposed to the outside. According to an embodiment, the electronic device 1000 may be both inwardly folded or outwardly folded from the unfolded state, but the present disclosure is not limited thereto or thereby.

FIG. 2A shows a structure in which the electronic device 1000 includes one folding area FA defined therein as a representative example, but the present disclosure is not limited thereto or thereby. As an example, a plurality of folding axes and a plurality of folding areas corresponding to the folding axes may be defined in the electronic device 1000, and the electronic device 1000 may be inwardly or outwardly folded from the unfolded state in each of the folding areas.

According to an embodiment, at least one of the first display panel DP1 and/or the second display panel DP2 may sense an input from the pen PN without including a digitizer. Because the digitizer for sensing the input by the pen PN may be omitted, an increase in a thickness and a weight and a decrease in a flexibility of the electronic device 1000 due to the addition of a digitizer may be prevented. Accordingly, not only the first display panel DP1, but also the second display panel DP2, may be designed to sense the pen PN.

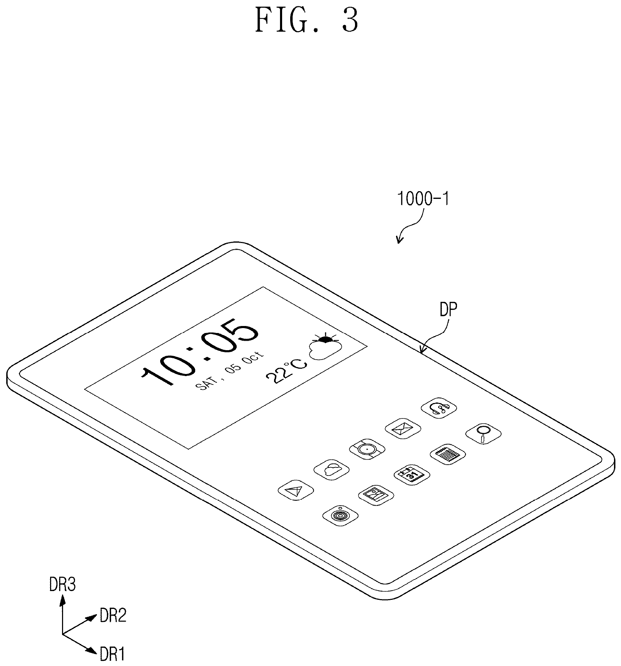

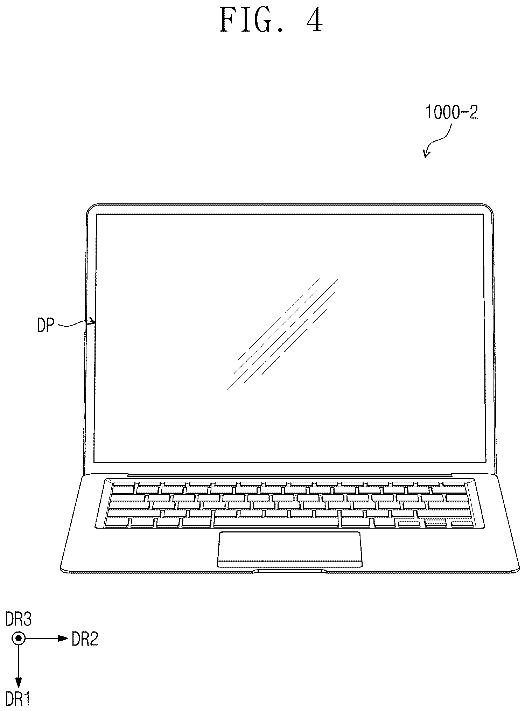

FIG. 3 is a perspective view of an electronic device 1000-1 according to an embodiment of the present disclosure. FIG. 4 is a perspective view of an electronic device 1000-2 according to an embodiment of the present disclosure.

FIG. 3 shows a bar-kind of mobile phone as a representative example of the electronic device 1000-1, and the electronic device 1000-1 may include a display panel DP. FIG. 4 shows a notebook computer as a representative example of the electronic device 1000-2, and the electronic device 1000-2 may include a display panel DP. FIG. 4 is a perspective view of the electronic device 1000-2, but the coordinate axes shown in FIG. 4 are illustrated based on the display panel DP within the electronic device 1000-2.

The display panel DP may sense external inputs applied from the outside. The external input may be a user input. The user input may include a variety of suitable forms of external inputs, such as a part of a user's body, a pen (e.g., refer to PN of FIG. 2A), light, heat, or pressure.

According to an embodiment, the display panel DP may sense an input given thereto by the pen PN even without including a digitizer. Because the digitizer to sense the input by the pen PN may be omitted, an increase in a thickness and a weight of the electronic device 1000-1 or 1000-2 due to the addition of a digitizer may be prevented.

FIG. 2A shows a foldable-kind of electronic device 1000 as a representative example, and FIG. 3 shows a bar-kind of electronic device 1000-1 as a representative example. However, the present disclosure is not limited thereto or thereby. As an example, some of the following embodiments described in more detail below may be applied to various kinds of electronic devices, such as a rollable kind of electronic device, a slidable kind of electronic device, a stretchable kind of electronic device, and the like.

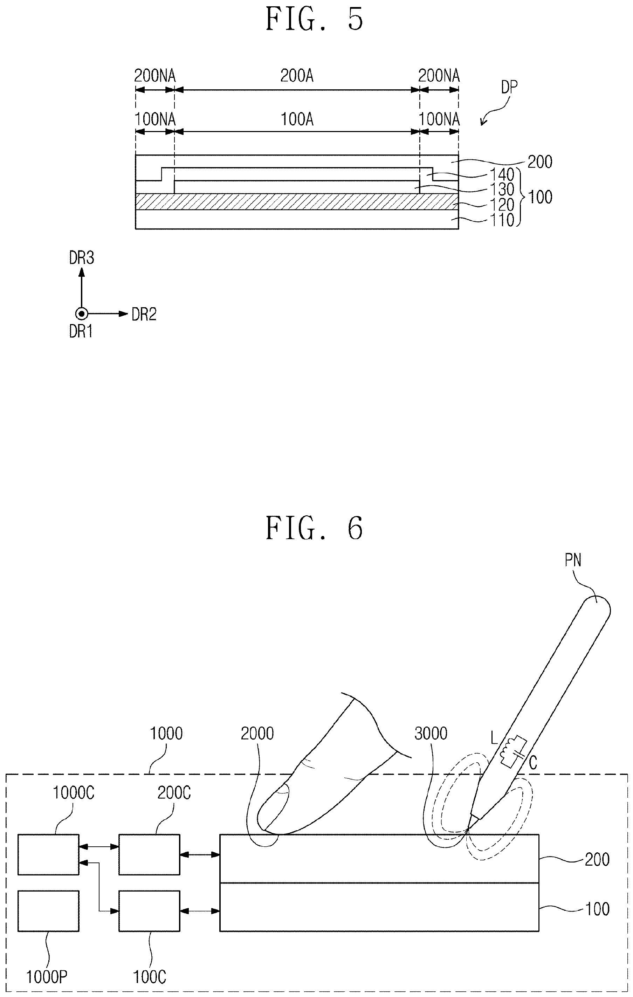

FIG. 5 is a cross-sectional view schematically illustrating the display panel DP according to an embodiment of the present disclosure.

Referring to FIG. 5, the display panel DP may include a display layer 100 and a sensor layer 200. An upper functional member may further be disposed on the sensor layer 200. As an example, the upper functional member may include at least one of an anti-reflective layer, a window, and/or a protective film.

The display layer 100 may generate or substantially generate an image. The display layer 100 may include a display area 100A, and a non-display area 100NA adjacent to the display area 100A. The image may be displayed through the display area 100A.

The display layer 100 may be a light emitting kind of display layer. For example, the display layer 100 may be an organic light emitting display layer, an inorganic light emitting display layer, an organic-inorganic light emitting display layer, a quantum dot display layer, a micro-LED display layer, or a nano-LED display layer. The display layer 100 may include a base layer 110, a circuit layer 120, a light emitting element layer 130, and an encapsulation layer 140.

The base layer 110 may provide a base surface on which the circuit layer 120 is disposed. The base layer 110 may have a single-layer or multi-layered structure. The base layer 110 may be a glass substrate, a metal substrate, a silicon substrate, or a polymer substrate, but the present disclosure is not particularly limited thereto or thereby.

The circuit layer 120 may be disposed on the base layer 110. The circuit layer 120 may include an insulating layer, a semiconductor pattern, a conductive pattern, and a signal line. An insulating layer, a semiconductor layer, and a conductive layer may be formed on the base layer 110 by a coating or depositing process. Then, the insulating layer, the semiconductor layer, and the conductive layer may be selectively patterned through several photolithography processes.

The light emitting element layer 130 may be disposed on the circuit layer 120. The light emitting element layer 130 may include a light emitting element. For example, the light emitting element layer 130 may include an organic light emitting material, an inorganic light emitting material, an organic-inorganic light emitting material, a quantum dot, a quantum rod, a micro-LED, or a nano-LED.

The encapsulation layer 140 may be disposed on the light emitting element layer 130. The encapsulation layer 140 may protect the light emitting element layer 130 from moisture, oxygen, and foreign substances, such as dust particles.

The sensor layer 200 may be disposed on the display layer 100. The sensor layer 200 may include a sensing area 200A, and a peripheral area 200NA adjacent to the sensing area 200A. The sensing area 200A may overlap with the display area 100A, and the peripheral area 200NA may overlap with the non-display area 100NA.

According to an embodiment, the sensing area 200A may have a size greater than or equal to a size of the display area 100A. FIG. 5 shows a structure in which the size of the sensing area 200A is equal to or substantially equal to the size of the display area 100A as a representative example, but the present disclosure is not limited thereto or thereby. As an example, a portion of the sensing area 200A may overlap with the non-display area 100NA, and the size of the sensing area 200A may be greater than the size of the display area 100A. In this case, even when an input occurs adjacent to a boundary between the display area 100A and the non-display area 100NA, the input may be sufficiently sensed because the sensing area 200A overlaps with a portion of the non-display area 100NA. Accordingly, a coordinate accuracy for touches entered at the periphery of the display area 100A may be further improved.

The sensor layer 200 may sense the external input applied from the outside. The sensor layer 200 may be an integrated sensor that is formed continuously in a manufacturing process of the display layer 100, or the sensor layer 200 may be an external kind of sensor that is attached to the display layer 100. The sensor layer 200 may be referred to as a sensor, an input sensing layer, an input sensing panel, or an electronic device for sensing input coordinate.

According to an embodiment, the sensor layer 200 may sense both an input from a passive kind of input member, such as a part of a user's body, and an input from an input device that generates a magnetic field with a suitable resonant frequency (e.g., a selected or predetermined resonant frequency). The input device may be referred to as a pen, an input pen, a magnetic pen, a stylus pen, or an electromagnetic resonance pen.

FIG. 6 is a schematic view illustrating an operation of the electronic device 1000 according to an embodiment of the present disclosure.

Referring to FIG. 6, the electronic device 1000 may include the display layer 100, the sensor layer 200, a display driver 100C, a sensor driver 200C, a main driver 1000C, and a power circuit 1000P.

The sensor layer 200 may sense a first input 2000 or a second input 3000 that is applied from the outside. Each of the first input 2000 and the second input 3000 may be an input by an input member that causes a variation in a capacitance of the sensor layer 200, or an input by an input member that induces a current in the sensor layer 200. As an example, the first input 2000 may be an input by a passive-kind of input member, such as a part of a user's body. The second input 3000 may be an input generated by the pen PN, or an input by an RFIC tag. As an example, the pen PN may be a passive-kind of pen or an active-kind of pen.

The pen PN may be a device that generates a magnetic field of a suitable resonant frequency (e.g., a selected or predetermined resonant frequency). The pen PN may transmit an output signal based on an electromagnetic resonance method. The pen PN may be referred to as an input device, an input pen, a magnetic pen, a stylus pen, or an electromagnetic resonance pen.

The pen PN may include an RLC resonant circuit, and the RLC resonant circuit may include an inductor L and a capacitor C. The RLC resonant circuit may be a variable resonant circuit that varies a resonant frequency. In this case, the inductor L may be a variable inductor and/or the capacitor C may be a variable capacitor, but the present disclosure is not limited thereto or thereby.

The inductor L may generate a current by a magnetic field formed in the electronic device 1000 (e.g., in the sensor layer 200), but the present disclosure is not limited thereto or thereby. As an example, when the pen PN operates as an active kind, the pen PN may generate a current even without receiving a magnetic field from the outside. The generated current may be transmitted to the capacitor C. The capacitor C may be charged with the current input from the inductor L, and may discharge the charged current to the inductor L. Then, the inductor L may emit the magnetic field at the resonant frequency. The induced current may flow through the sensor layer 200 due to the magnetic field emitted by the pen PN, and the induced current may be transmitted to the sensor driver 200C as a reception signal (e.g., a sensing signal, a signal, and the like).

The main driver 1000C may control the overall operations of the electronic device 1000. For example, the main driver 1000C may control an operation of the display driver 100C and the sensor driver 200C. In other words, the main driver 1000C may control operations of the display layer 100 and the sensor layer 200. The main driver 1000C may include at least one microprocessor, and may further include a graphics controller. The main driver 1000C may be referred to as an application processor, a central processing unit, or a main processor. The main driver 1000C may correspond to the processor 12 described above with reference to FIG. 1.

The display driver 100C may drive the display layer 100. The display driver 100C may receive image data and a control signal from the main driver 1000C. The control signal may include a variety of suitable signals. As an example, the control signal may include an input vertical synchronization signal, an input horizontal synchronization signal, a main clock signal, a data enable signal, or the like.

The sensor driver 200C may drive the sensor layer 200. The sensor driver 200C may receive a control signal from the main driver 1000C. The control signal may include a clock signal of the sensor driver 200C. In addition, the control signal may further include a mode determination signal to determine a driving mode of the sensor driver 200C and the sensor layer 200.

The sensor driver 200C may be implemented as an integrated circuit (IC), and may be electrically connected to the sensor layer 200. As an example, the sensor driver 200C may be directly mounted on a selected area of the display panel, or may be electrically connected to the sensor layer 200 after being mounted on a separated printed circuit board in a chip-on-film (COF) manner.

The sensor driver 200C and the sensor layer 200 may selectively operate in a first mode or a second mode. As an example, the first mode may be a mode to sense a touch input (e.g., the first input 2000). The second mode may be a mode to sense the input generated by the pen PN (e.g., the second input 3000). The first mode may be referred to as a touch sensing mode, and the second mode may be referred to as a pen sensing mode.

The first mode and the second mode may be switched in a variety of suitable ways. As an example, the sensor driver 200C and the sensor layer 200 may operate in a time-division manner between the first mode and the second mode, and may sense the first input 2000 and the second input 3000. In addition, switching between the first mode and the second mode may occur based on a user's selection or a user's specific action (or input), or one of the first mode and/or the second mode may be activated or deactivated, or a switch from one of the first mode and/or the second mode to the other may occur based on whether a specific application is activated or deactivated. When the first input 2000 is sensed while the sensor driver 200C and the sensor layer 200 are alternately operated in the first mode and the second mode, the first mode may be maintained, and when the second input 3000 is sensed while the sensor driver 200C and the sensor layer 200 are alternately operated in the first mode and the second mode, the second mode may be maintained.

The sensor driver 200C may calculate coordinate information of the input based on the signal applied from the sensor layer 200, and may provide a coordinate signal having the coordinate information to the main driver 1000C. The main driver 1000C may execute an operation corresponding to the user's input based on the coordinate signal. For example, the main driver 1000C may drive the display driver 100C so that a new application image is displayed on the display layer 100.

The power circuit 1000P may include a power management integrated circuit (PMIC). The power circuit 1000P may generate a plurality of driving voltages to drive the display layer 100, the sensor layer 200, the display driver 100C, and the sensor driver 200C. As an example, the driving voltages may include a gate high voltage, a gate low voltage, a first driving voltage, a second driving voltage, an initialization voltage, and/or the like, but the present disclosure is not particularly limited thereto or thereby.

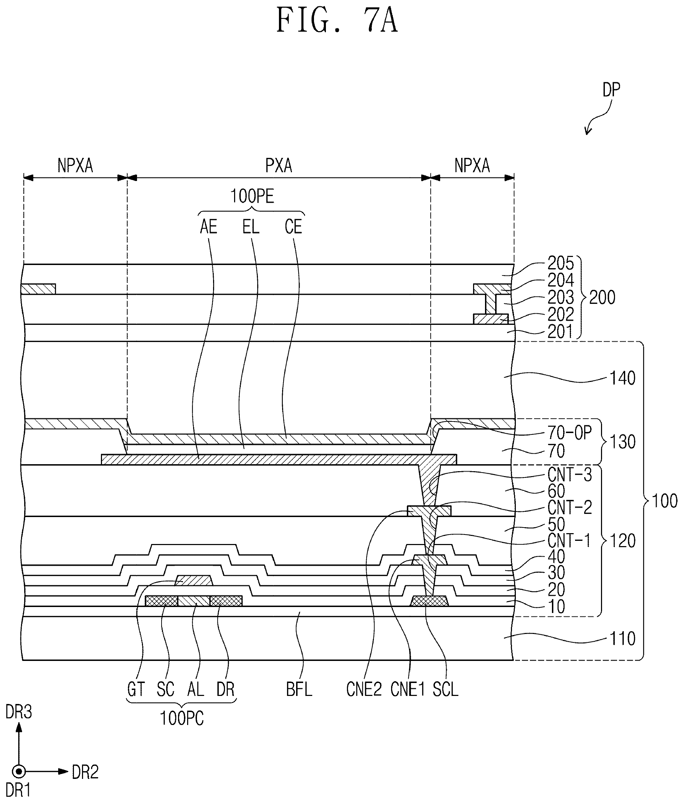

FIG. 7A is a cross-sectional view of the display panel DP according to an embodiment of the present disclosure.

Referring to FIG. 7A, at least one buffer layer BFL may be formed on an upper surface of the base layer 110. The buffer layer BFL may increase an adhesive force between the base layer 110 and a semiconductor pattern. The buffer layer BFL may be formed in multiple layers. The display layer 100 may further include a barrier layer. The buffer layer BFL may include at least one of silicon oxide, silicon nitride, and/or silicon oxynitride. For example, the buffer layer BFL may have a stacked structure in which a silicon oxide layer and a silicon nitride layer are alternately stacked with each other.

The semiconductor pattern SC, AL, DR, and SCL may be disposed on the buffer layer BFL. The semiconductor pattern SC, AL, DR, and SCL may include polycrystalline silicon, but the present disclosure is not limited thereto or thereby. The semiconductor pattern SC, AL, DR, and SCL may include amorphous silicon, a low temperature polycrystalline silicon, or an oxide semiconductor.

FIG. 7A shows a portion (e.g., only a portion) of the semiconductor pattern SC, AL, DR, and SCL, and the semiconductor pattern may be further disposed in other areas in other views. The semiconductor pattern SC, AL, DR, and SCL may be arranged with a suitable rule (e.g., a specific or predetermined rule) over pixels. The semiconductor pattern SC, AL, DR, and SCL may have different electrical properties depending on whether it is doped or not. The semiconductor pattern SC, AL, DR, and SCL may include a region SC, DR, and SCL having a relatively higher conductivity, and a region AL having a relatively lower conductivity. The region SC, DR, and SCL having the relatively higher conductivity may be doped with an N-type dopant or a P-type dopant. A P-type transistor may include a doped region that is doped with the P-type dopant, and an N-type transistor may include a doped region that is doped with the N-type dopant. The region AL having the relatively lower conductivity may be a non-doped region, or a region that is doped at a concentration lower than that of the first region SC, DR, and SCL.

The region SC, DR, and SCL having the relatively higher conductivity may have a conductivity higher than that of the region AL having the relatively lower conductivity, and may substantially serve as an electrode or a signal line. The region AL having the relatively lower conductivity may substantially correspond to an active area AL (e.g., a channel) of a transistor 100PC. In other words, a portion AL of the semiconductor pattern SC, AL, DR, and SCL may be the active area AL of the transistor 100PC, another portion SC or DR of the semiconductor pattern SC, AL, DR, and SCL may be a source area SC or a drain area DR of the transistor 100PC, and another portion SCL of the semiconductor pattern SC, AL, DR, and SCL may be a connection electrode or a connection signal line SCL.

Each of the pixels may have an equivalent circuit that includes a plurality of transistors, at least one capacitor, and at least one light emitting element, but the equivalent circuit of the pixel may be variously modified as needed or desired. FIG. 7A shows one transistor 100PC and one light emitting element 100PE included in the pixel as a representative example.

The source area SC, the active area AL, and the drain area DR of the transistor 100PC may be formed from the semiconductor pattern SC, AL, DR, and SCL. The source area SC and the drain area DR may extend in opposite directions to each other from the active area AL in a cross-section. FIG. 7A shows a portion of the connection signal line SCL formed from the semiconductor pattern SC, AL, DR, and SCL. In another view, the connection signal line SCL may be connected to the drain area DR of the transistor 100PC in a plane (e.g., in a plan view).

A first insulating layer 10 may be disposed on the buffer layer BFL. The first insulating layer 10 may commonly overlap with the pixels, and may cover the semiconductor pattern SC, AL, DR, and SCL. The first insulating layer 10 may be an inorganic layer and/or an organic layer, and may have a single-layer or multi-layered structure. The first insulating layer 10 may include at least one of aluminum oxide, titanium oxide, silicon oxide, silicon nitride, silicon oxynitride, zirconium oxide, and/or hafnium oxide. In the present embodiment, the first insulating layer 10 may have a single-layer structure of a silicon oxide layer. Not only the first insulating layer 10, but also an insulating layer of the circuit layer 120 described in more detail below, may be an inorganic layer and/or an organic layer, and may have a single-layer or multi-layered structure. The inorganic layer may include at least one of the above-mentioned inorganic materials, but the present disclosure is not limited thereto or thereby.

A gate GT of the transistor 100PC may be disposed on the first insulating layer 10. The gate GT may be a portion of a metal pattern. The gate GT may overlap with the active area AL. The gate GT may be used as a mask in a process of doping or reducing the semiconductor pattern SC, AL, DR, and SCL.

A second insulating layer 20 may be disposed on the first insulating layer 10, and may cover the gate GT. The second insulating layer 20 may commonly overlap with the pixels. The second insulating layer 20 may be an inorganic layer and/or an organic layer, and may have a single-layer or multi-layered structure. The second insulating layer 20 may include at least one of silicon oxide, silicon nitride, and/or silicon oxynitride. In the present embodiment, the second insulating layer 20 may have a multi-layered structure of a silicon oxide layer and a silicon nitride layer.

A third insulating layer 30 may be disposed on the second insulating layer 20. The third insulating layer 30 may have a single-layer or multi-layered structure. As an example, the third insulating layer 30 may have a multi-layered structure of a silicon oxide layer and a silicon nitride layer.

A first connection electrode CNE1 may be disposed on the third insulating layer 30. The first connection electrode CNE1 may be connected to the connection signal line SCL via a contact hole CNT-1 defined through (e.g., penetrating) the first, second, and third insulating layers 10, 20, and 30.

A fourth insulating layer 40 may be disposed on the third insulating layer 30. The fourth insulating layer 40 may have a single-layer structure of a silicon oxide layer. A fifth insulating layer 50 may be disposed on the fourth insulating layer 40. The fifth insulating layer 50 may be an organic layer.

A second connection electrode CNE2 may be disposed on the fifth insulating layer 50. The second connection electrode CNE2 may be connected to the first connection electrode CNE1 via a contact hole CNT-2 defined through (e.g., penetrating) the fourth insulating layer 40 and the fifth insulating layer 50.

A sixth insulating layer 60 may be disposed on the fifth insulating layer 50, and may cover the second connection electrode CNE2. The sixth insulating layer 60 may be an organic layer.

The light emitting element layer 130 may be disposed on the circuit layer 120. The light emitting element layer 130 may include the light emitting element 100PE. As an example, the light emitting element layer 130 may include an organic light emitting material, an inorganic light emitting material, an organic-inorganic light emitting material, a quantum dot, a quantum rod, a micro-LED, or a nano-LED. Hereinafter, the organic light emitting element will be described in more detail as the light emitting element 100PE, but the present disclosure is not limited thereto or thereby.

The light emitting element 100PE may include a first electrode AE, a light emitting layer EL, and a second electrode CE. The light emitting element 100PE may be disposed in the display area 100A (e.g., refer to FIG. 5). The first electrode AE may be referred to as a pixel electrode, and the second electrode CE may be referred to as a common electrode.

The first electrode AE may be disposed on the sixth insulating layer 60. The first electrode AE may be connected to the second connection electrode CNE2 via a contact hole CNT-3 defined through (e.g., penetrating) the sixth insulating layer 60.

A pixel definition layer 70 may be disposed on the sixth insulating layer 60, and may cover a portion of the first electrode AE. An opening 70-OP may be defined through (e.g., penetrate) the pixel definition layer 70. At least a portion of the first electrode AE may be exposed through the opening 70-OP of the pixel definition layer 70.

The display area 100A (e.g., refer to FIG. 5) may include a light emitting area PXA, and a non-light-emitting area NPXA adjacent to the light emitting area PXA. The non-light-emitting area NPXA may surround (e.g., around a periphery of) the light emitting area PXA. In the present embodiment, the light emitting area PXA may be defined to correspond to the portion of the first electrode AE exposed through the opening 70-OP.

The light emitting layer EL may be disposed on the first electrode AE. The light emitting layer EL may be disposed in an area corresponding to the opening 70-OP. FIG. 7A shows a structure in which the light emitting layer EL is disposed in the opening 70-OP as a representative example, but the present disclosure is not particularly limited thereto or thereby. As another example, the light emitting layer EL may extend to cover a side surface of the pixel definition layer 70, which defines the opening 70-OP, and may cover a portion of an upper surface of the pixel definition layer 70.

The light emitting layer EL may be formed in each of the pixels after being divided into a plurality of portions. When the light emitting layer EL is formed in each of the pixels after being divided into a plurality of portions, each of the light emitting layers EL may emit a light having at least one of a blue color, a red color, and/or a green color, but the present disclosure is not limited thereto or thereby. The light emitting layer EL may have an integral shape, and may be commonly provided to the pixels. In this case, the light emitting layer EL may provide a blue light or a white light.

The second electrode CE may be disposed on the light emitting layer EL. The second electrode CE may have an integral shape, and may be commonly disposed over the pixels.

According to the present embodiment, a hole control layer may be disposed between the first electrode AE and the light emitting layer EL. The hole control layer may be commonly disposed in the light emitting area PXA and the non-light-emitting area NPXA. The hole control layer may include a hole transport layer, and may further include a hole injection layer as needed or desired. An electron control layer may be disposed between the light emitting layer EL and the second electrode CE. The electron control layer may include an electron transport layer, and may further include an electron injection layer as needed or desired. Each of the hole control layer and the electron control layer may be commonly formed in the plurality of pixels using an open mask or an inkjet process.

The encapsulation layer 140 may be disposed on the light emitting element layer 130. The encapsulation layer 140 may include an inorganic layer, an organic layer, and an inorganic layer, which are sequentially stacked one on another, however, the layers of the encapsulation layer 140 are not limited thereto or thereby. The inorganic layers may protect the light emitting element layer 130 from moisture and oxygen, and the organic layer may protect the light emitting element layer 130 from a foreign substance, such as dust particles. The inorganic layers may include a silicon nitride layer, a silicon oxynitride layer, a silicon oxide layer, a titanium oxide layer, or an aluminum oxide layer. The organic layer may include an acrylic-based organic layer, but the present disclosure is not limited thereto or thereby.

The sensor layer 200 may include a base layer 201, a first conductive layer 202, an intermediate insulating layer 203, a second conductive layer 204, and a cover insulating layer 205.

The base layer 201 may be an inorganic layer including at least one of silicon nitride, silicon oxynitride, and/or silicon oxide. According to an embodiment, the base layer 201 may be an organic layer including an epoxy-based resin, an acrylic-based resin, or an imide-based resin. The base layer 201 may have a single-layer structure, or a multi-layered structure of a plurality of layers stacked in the third direction DR3. According to an embodiment, the sensor layer 200 may not include the base layer 201.

Each of the first conductive layer 202 and the second conductive layer 204 may have a single-layer structure, or a multi-layered structure of a plurality of layers stacked in the third direction DR3.

Each of the first and second conductive layers 202 and 204 having the single-layer structure may include a metal layer or a transparent conductive layer. The metal layer may include molybdenum, silver, titanium, copper, aluminum, or suitable alloys thereof. The transparent conductive layer may include a transparent conductive oxide, such as indium tin oxide (ITO), indium zinc oxide (IZO), zinc oxide (ZnO), indium zinc tin oxide (IZTO), or the like. In addition, the transparent conductive layer may include a conductive polymer, such as poly(3,4-ethylenedioxythiophene) (PEDOT), a metal nanowire, graphene, or the like.

Each of the first and second conductive layers 202 and 204 having the multi-layered structure may include a plurality of metal layers. The metal layers may have a three-layered structure of titanium/aluminum/titanium. The conductive layer having the multi-layered structure may include at least one metal layer and at least one transparent conductive layer.

The first conductive layer 202 may have a thickness greater than or equal to a thickness of the second conductive layer 204. When the thickness of the first conductive layer 202 is greater than the thickness of the second conductive layer 204, a resistance of components (e.g., an electrode, a pattern, or a bridge pattern) included in the first conductive layer 202 may be reduced. In addition, because the first conductive layer 202 may be disposed below the second conductive layer 204, a probability that the components included in the first conductive layer 202 are recognized due to a reflection of external light may be lower than a probability that components included in the second conductive layer 204 are recognized even when the thickness of the first conductive layer 202 increases.

At least one of the intermediate insulating layer 203 and/or the cover insulating layer 205 may include an inorganic layer. The inorganic layer may include at least one of aluminum oxide, titanium oxide, silicon oxide, silicon nitride, silicon oxynitride, zirconium oxide, and/or hafnium oxide.

At least one of the intermediate insulating layer 203 and/or the cover insulating layer 205 may include an organic layer. The organic layer may include at least one of an acrylic-based resin, a methacrylic-based resin, polyisoprene-based resin, a vinyl-based resin, an epoxy-based resin, a urethane-based resin, a cellulose-based resin, a siloxane-based resin, a polyimide-based resin, a polyamide-based resin, and/or a perylene-based resin.

While the sensor layer 200 has been described as including the first conductive layer 202 and the second conductive layer 204, or in other words, a total of two conductive layers, the present disclosure is not limited thereto or thereby. As an example, the sensor layer 200 may include three or more conductive layers.

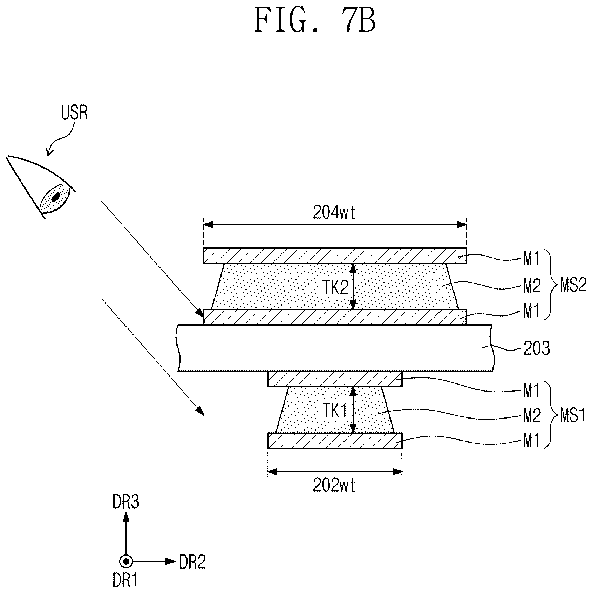

FIG. 7B is a cross-sectional view of some components of the sensor layer 200 according to an embodiment of the present disclosure.

Referring to FIGS. 7A and 7B, a second mesh line MS2 included in the second conductive layer 204 may have a second width 204wt that is greater than or equal to a first width 202wt of a first mesh line MS1 included in the first conductive layer 202. When a user USR views the first mesh line MS1 and the second mesh line MS2 from a side of the sensor layer 200, a probability that the first mesh line MS1 is perceived by the user USR may be reduced, because the width of the first mesh line MS1 is smaller than that of the second mesh line MS2.

Each of the first mesh line MS1 and the second mesh line MS2 may include first metal layers M1, and a second metal layer M2 disposed between the first metal layers M1. As an example, the first metal layers M1 may include titanium (Ti), and the second metal layer M2 may include aluminum (Al), but the present disclosure is not limited thereto.

According to the present embodiment, a first thickness TK1 of the second metal layer M2 of the first mesh line MS1 and a second thickness TK2 of the second metal layer M2 of the second mesh line MS2 may be the same or substantially the same as each other, but the present disclosure is not particularly limited thereto or thereby. As an example, the first thickness TK1 may be greater than the second thickness TK2, or the second thickness TK2 may be greater than the first thickness TK1. According to the present embodiment, each of the first thickness TK1 and the second thickness TK2 may be greater than or equal to 1000 angstroms (e.g., about 6000 angstroms).

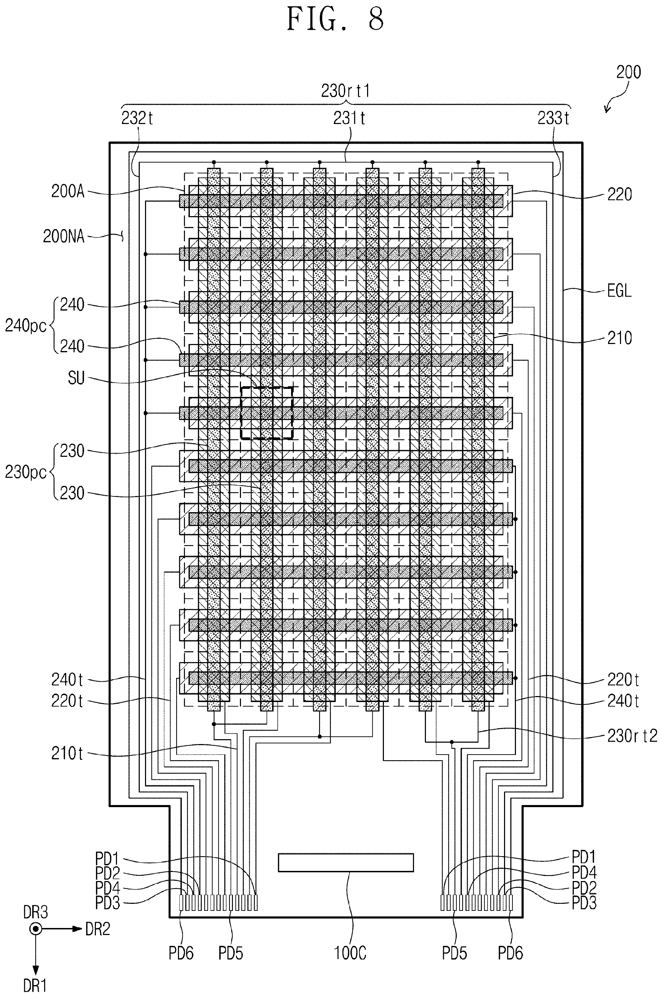

FIG. 8 is a plan view of the sensor layer 200 according to an embodiment of the present disclosure.

Referring to FIG. 8, the sensor layer 200 may include the sensing area 200A, and the peripheral area 200NA adjacent to the sensing area 200A.

The sensor layer 200 may include a plurality of first electrodes 210, a plurality of second electrodes 220, a plurality of third electrodes 230, and a plurality of fourth electrodes 240, which are arranged in the sensing area 200A.

Each of the first electrodes 210 may intersect or cross the second electrodes 220. Each of the first electrodes 210 may extend in the first direction DR1, and the first electrodes 210 may be arranged to be spaced apart from each other in the second direction DR2.

Each of the second electrodes 220 may intersect or cross the first electrodes 210. Each of the second electrodes 220 may extend in the second direction DR2, and the second electrodes 220 may be arranged to be spaced apart from each other in the first direction DR1. A sensing unit SU of the sensor layer 200 may be an area where one first electrode 210 intersects or crosses one second electrode 220.

FIG. 8 illustrates six first electrodes 210, ten second electrodes 220, and sixty sensing units SU as a representative example, however, the number of the first electrodes 210 and the number of the second electrodes 220 are not limited thereto or thereby. As an example, the number of the first electrodes 210 may be greater than the number of the second electrodes 220.

FIG. 8 illustrates a structure in which a width in the first direction DR1 of the sensing area 200A is greater than a width in the second direction DR2 of the sensing area 200A as a representative example, however, the present disclosure is not limited thereto or thereby. As an example, when the number of the first electrodes 210 is greater than the number of the second electrodes 220, the width in the first direction DR1 of the sensing area 200A may be smaller than the width in the second direction DR2 of the sensing area 200A.

Each of the third electrodes 230 may extend in the first direction DR1, and the third electrodes 230 may be arranged to be spaced apart from each other in the second direction DR2. One third electrode 230 may overlap with at least a portion of one first electrode 210. According to the present embodiment, a capacitance (e.g., a coupling capacitance) between one first electrode 210 and one third electrode 230 may be controlled by adjusting the overlapping area between the one first electrode 210 and the one third electrode 230.

According to an embodiment, at least some of the third electrodes 230 may be connected to each other in parallel. FIG. 8 illustrates a structure in which two third electrodes 230 are connected to each other in parallel to form a first electrode group 230pc as a representative example, and three first electrode groups 230pc may be arranged in the second direction DR2. However, the number of the third electrodes 230 forming the first electrode group 230pc are not limited thereto or thereby. As an example, one first electrode group 230pc may include only one third electrode 230, or may include three or more third electrodes 230.

As the number of the third electrodes 230 included in the first electrode group 230pc and connected to each other in parallel increases, a resistance of the first electrode group 230pc may be reduced, a power efficiency may be improved, and a sensing sensitivity may be enhanced. On the other hand, as the number of the third electrodes 230 included in the first electrode group 230pc decreases, a loop coil pattern formed using the first electrode group 230pc may be implemented in more various ways.

The fourth electrodes 240 may extend in the second direction DR2, and the fourth electrodes 240 may be arranged in the first direction DR1. One fourth electrode 240 may overlap with at least a portion of one second electrode 220. According to the present embodiment, a capacitance (e.g., a coupling capacitance) between one second electrode 220 and one fourth electrode 240 may be controlled by adjusting the overlapping area between the one second electrode 220 and the one fourth electrode 240.

According to an embodiment, at least some of the fourth electrodes 240 may be electrically connected to each other to form one electrode group 240pc. As an example, in FIG. 8, five fourth electrodes 240 are connected to the same one trace line, for example, such as an auxiliary trace line 240t, to form one second electrode group 240pc. Accordingly, FIG. 8 illustrates a structure in which two second electrode groups 240pc are arranged in the first direction DR1. However, the number of the fourth electrodes 240 constituting one second electrode group 240pc are not limited thereto or thereby. As an example, the number of the fourth electrodes 240 constituting one second electrode group 240pc may be ten, and in this case, the sensor layer 200 may include only one second electrode group 240pc.

The sensor layer 200 may further include a plurality of first trace lines 210t arranged in the peripheral area 200NA, a plurality of first pads PD1 connected to the first trace lines 210t in a one-to-one correspondence, a plurality of second trace lines 220t, and a plurality of second pads PD2 connected to the second trace lines 220t in a one-to-one correspondence.

The first trace lines 210t may be electrically connected to the first electrodes 210 in a one-to-one correspondence. The second trace lines 220t may be electrically connected to the second electrodes 220 in a one-to-one correspondence.

The sensor layer 200 may further include a first loop trace line 230rt1 arranged in the peripheral area 200NA, a plurality of third pads PD3 connected to one end and another end of the first loop trace line 230rt1, auxiliary trace lines 240t, fourth pads PD4 connected to the auxiliary trace lines 240t in a one-to-one correspondence, second loop trace lines 230rt2, and fifth pads PD5 connected to the second loop trace lines 230rt2 in a one-to-one correspondence.

The first loop trace line 230rt1 may be referred to as a loop trace line, the second loop trace lines 230rt2 may be referred to as third trace lines, and the auxiliary trace lines 240t may be referred to as fourth trace lines 240t.

The first loop trace line 230rt1 may be electrically connected to the third electrodes 230. In other words, the first loop trace line 230rt1 may be electrically connected to all of the third electrodes 230. The third electrodes 230 may be referred to as charging electrodes.

The first loop trace line 230rt1 may include a first line portion 231t extending in the second direction DR2 and electrically connected to the third electrodes 230, a second line portion 232t extending from a first end of the first line portion 231t along the first direction DR1, and a third portion 233t extending from a second end of the first line portion 231t along the first direction DR1.

The first line portion 231t may be spaced apart from the first, second, third, fourth, and fifth pads PD1, PD2, PD3, PD4, and PD5 arranged in the peripheral area 200NA, and the sensing area 200A may be disposed between the first line portion 231t and the first, second, third, fourth, and fifth pads PD1, PD2, PD3, PD4, and PD5. Some of the second trace lines 220t may be disposed between the second line portion 232t and the first electrodes 210, and others of the second trace lines 220t may be disposed between the third line portion 233t and the first electrodes 210.

Each of the second line portion 232t and the third line portion 233t may extend in the same direction as that of the extension direction of the third electrodes 230 (e.g., the first direction DR1). Each of the second line portion 232t and the third line portion 233t may serve as part of the first electrode group 230pc, and may provide an effect as if the third electrodes 230 are also arranged in the peripheral area 200NA. As an example, one of the second line portion 232t or the third line portion 233t and one of the third electrodes 230 may form a coil. Accordingly, the pen PN (e.g., refer to FIG. 6) located at an area adjacent to the peripheral area 200NA may be sufficiently charged by a loop including the second line portion 232t and the third portion 233t.

According to an embodiment, positions and widths in the first direction DR1 of the second line portion 232t and the third line portion 233t may be adjusted to control a resistance of the second line portion 232t and a resistance of the third line portion 233t. In this case, the pen PN (e.g., refer to FIG. 6) may be sufficiently charged through a current path that includes either the second line portion 232t or the third line portion 233t. As a result, a charging performance of the pen PN of the electronic device 1000 (e.g., refer to FIG. 2A) may be improved. In other words, as a charging rate of the pen PN is improved, a signal-to-noise ratio of the signal provided from the pen PN may increase. Accordingly, the linearity and accuracy of the input from the pen PN may be enhanced.

The second loop trace lines 230rt2 may be connected to the first electrode groups 230pc in a one-to-one correspondence. In other words, the number of the second loop trace lines 230rt2 may correspond to the number of the first electrode groups 230pc. FIG. 8 illustrates three second loop trace lines 230rt2 and three first electrode electrodes 230pc as a representative example.

The auxiliary trace lines 240t may be spaced apart from each other, and the sensing area 200A may be disposed between the auxiliary trace lines 240t. The auxiliary trace lines 240t may be electrically connected to the second electrode groups 240pc in a one-to-one correspondence. FIG. 8 illustrates two second electrode groups 240pc as a representative example. The auxiliary trace line 240t connected to one second electrode group 240pc and the auxiliary trace line 240t connected to another second electrode group 240pc may be spaced apart from each other, and the sensing area 200A may be disposed between the auxiliary trace lines 240t. However, the present disclosure is not particularly limited thereto or thereby.

In an embodiment of the present disclosure, the sensor layer 200 may further include a shielding line EGL disposed on the peripheral area 200NA, and sixth pads PD6 connected to the shielding line EGL. The shielding line EGL may be disposed adjacent to an outermost edge of the sensor layer 200. The shielding line EGL may be referred to as an electrostatic shielding line or a ground line, and the sixth pads PD6 may be referred to as ground pads. The shielding line EGL may be grounded, or a constant voltage may be applied to the shielding line EGL.

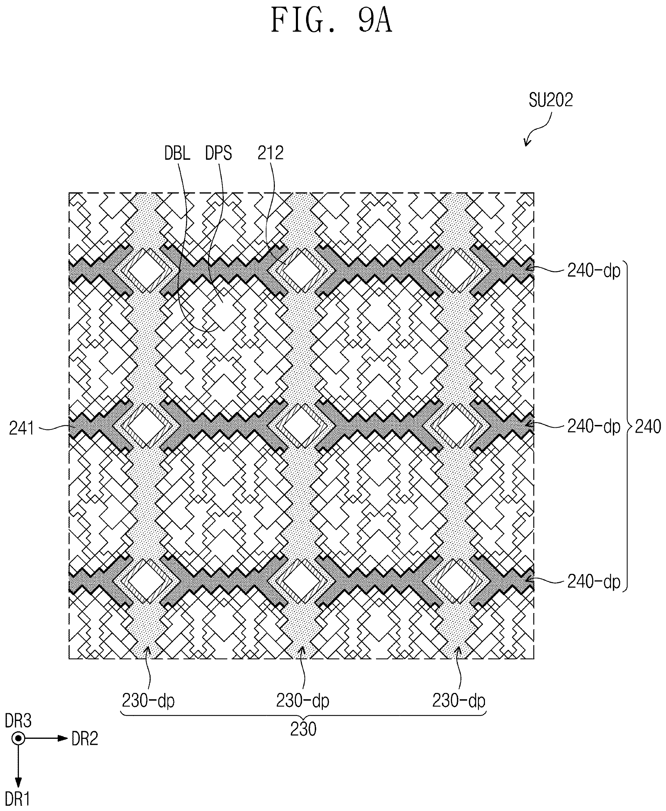

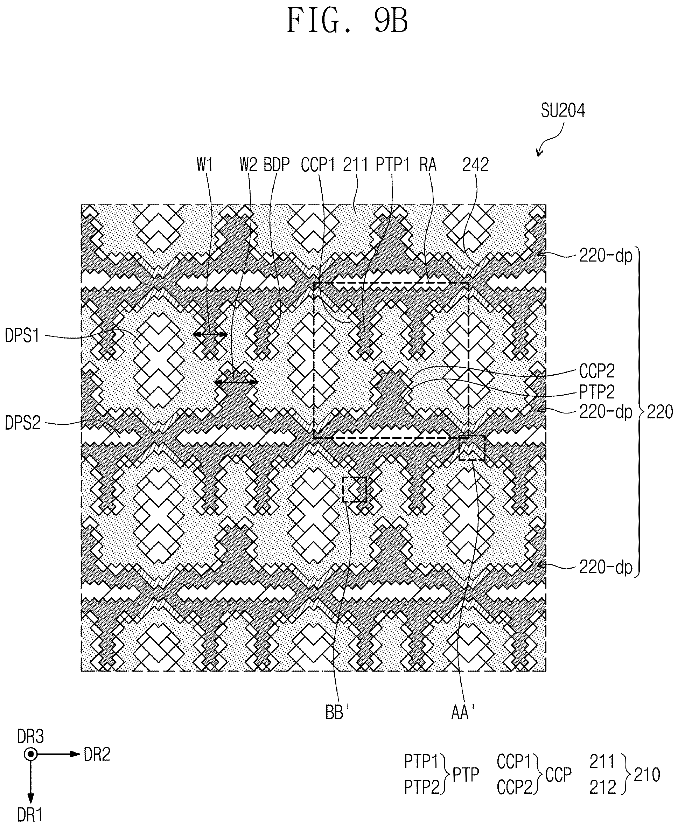

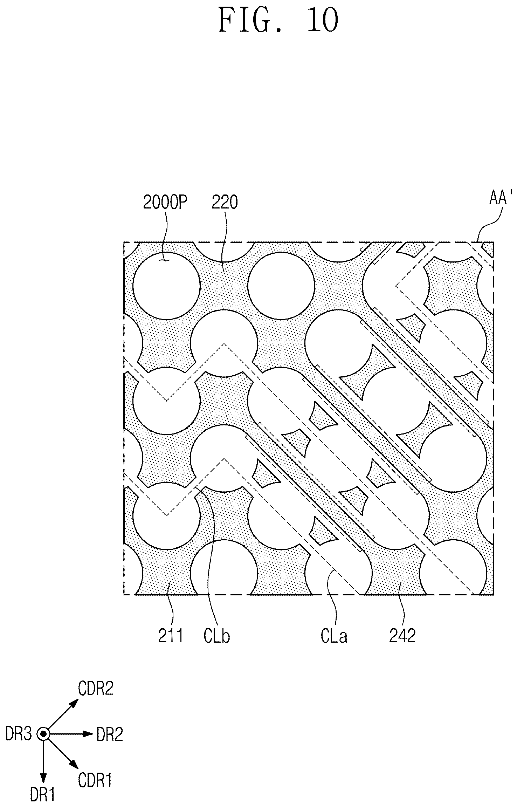

FIG. 9A is a plan view of a first conductive layer SU202 of the sensing unit SU according to an embodiment of the present disclosure. FIG. 9B is a plan view of a second conductive layer SU204 of the sensing unit SU according to an embodiment of the present disclosure. FIG. 10 is an enlarged plan view of the area AA' shown in FIG. 9B.

In FIGS. 9A and 9B, the shape of a mesh structure is not depicted, and only the boundaries of each component are illustrated simply as lines. In other words, the lines illustrated in FIGS. 9A and 9B may correspond to outlines that remain when the mesh structure of FIG. 10 is removed (i.e. when the mesh structure is not depicted), and lines CLa and CLb are depicted as dashed lines.

The shape of the sensing unit SU and the mesh structure shown in FIGS. 9A, 9B, and 10 are illustrated as an example, and the present disclosure is not limited thereto or thereby. The shape of the sensing unit SU and the mesh structure may be variously modified as needed or desired.

Referring to FIGS. 9A and 9B, the first electrode 210 may include a plurality of first patterns 211, and a plurality of first bridge patterns 212 electrically connected to the first patterns 211. The first patterns 211 that are arranged to be spaced apart from each other in the first direction DR1 may be electrically connected to each other by the first bridge patterns 212. The first patterns 211 may be included in the second conductive layer SU204, and the first bridge patterns 212 may be included in the first conductive layer SU202. The first conductive layer SU202 may be referred to as a first layer SU202, and the second conductive layer SU204 may be referred to as a second layer SU204.

In one first electrode 210, two first patterns 211 that are adjacent to each other in the first direction DR1 may be electrically connected to each other by six first bridge patterns 212. An increase in the number of the first bridge patterns 212 arranged in the second direction DR2 intersecting or crossing the first direction DR1, which is the extension direction of the first electrode 210, may correspond to an increase in the number of signal paths. Accordingly, as the number of the signal paths increases, the resistance of the first electrode 210 may decrease. As a result, the sensing sensitivity of the sensor layer 200 may be improved.

The second electrode 220 may include a plurality of first division electrodes 220-dp that are spaced apart from each other in the first direction DR1. Each of the first division electrodes 220-dp may extend in the second direction DR2. The first division electrodes 220-dp may be included in the second conductive layer SU204. Three first division electrodes 220-dp included in one second electrode 220 may be connected to one second trace line 220t (e.g., refer to FIG. 8).

In an embodiment, the first electrode 210 may include a plurality of concave portions CCP. The concave portions CCP may be included in the first patterns 211 of the first electrode 210. The concave portions may denote portions that are formed concavely in the first patterns 211. The concave portions may be concave in the plane defined by DR1 and DR2, i.e. the plane represented in Figures 9A, 9B and 10.

In an embodiment, the concave portions CCP may include a plurality of first concave portions CCP1 recessed in the first direction DR1, and a plurality of second concave portions CCP2 recessed in a direction opposite to the first direction DR1. In other words, the first concave portions CCP1 may denote portions recessed inward from an upper end of each of the first patterns 211, and the second concave portions CCP2 may denote portions recessed inward from a lower end of each of the first patterns 211.

In an embodiment, the second electrode 220 may include a plurality of protruding portions PTP that are protruded to engage with the concave portions CCP of the first electrode 210. The protruding portions PTP may correspond to the concave portions CCP in a one-to-one correspondence, and may be engaged with the concave portions CCP. In an embodiment, the shapes of the first electrode 210 and the second electrode 220, which are arranged to engage with each other, may have a serrated shape.

According to some embodiments of the present disclosure, the first electrode 210 and the second electrode 220 may have the serrated shape, and may be arranged to engage with each other. When the first and second electrodes 210 and 220 have the serrated shape, an engaged area between the first electrode 210 and the second electrode 220 may increase, an effective coupling area between the first electrode 210 and the second electrode 220 may increase, and a variation in a capacitance between the first electrode 210 and the second electrode 220 may also increase. Accordingly, the electronic device 1000 (e.g., refer to FIG. 2A) having improved pen sensitivity and touch sensitivity may be provided.

In an embodiment, the protruding portions PTP may include a plurality of first protruding portions PTP1 protruded to engage with the first concave portions CCP1, and a plurality of second protruding portions PTP2 protruded to engage with the second concave portions CCP2. In other words, the first protruding portions PTP1 may correspond one-to-one with the first concave portions CCP1, and may be engaged with the first concave portions CCP1. The second protruding portions PTP2 may correspond one-to-one with the second concave portions CCP2, and may be engaged with the second concave portions CCP2.

In an embodiment, the number of the first concave portions CCP1 may be greater than the number of the second concave portions CCP2. Within a reference area RA, the number of the first concave portions CCP1 included in a portion of one first pattern 211 may be two, and the number of the second concave portions CCP2 included in the portion of one first pattern 211 may be one. Accordingly, the number of the first protruding portions PTP1 corresponding one-to-one with the first concave portions CCP1 may be two, and the number of second protruding portions PTP2 corresponding one-to-one with the second concave portion CCP2 may be one.

In an embodiment, a maximum width W1 of each of the first concave portions CCP1 in the second direction DR2 may be smaller than a maximum width W2 of each of the second concave portions CCP2 in the second direction DR2. However, the present disclosure is not limited thereto or thereby, and the widths of the first concave portions CCP1 and the second concave portions CCP2 may be variously modified as needed or desired.

In an embodiment, each of the second concave portions CCP2 may be disposed between two first concave portions CCP1 that are adjacent to each other among the first concave portions CCP1. However, the present disclosure is not limited thereto or thereby, and the arrangement relationship between the first concave portions CCP1 and the second concave portions CCP2 may be variously modified as needed or desired.

In an embodiment, the second conductive layer SU204 may further include a plurality of boundary dummy patterns BDP arranged between the concave portions CCP and the protruding portions PTP, a plurality of first dummy patterns DPS1 surrounded (e.g., around a periphery thereof) by the first electrode 210, and a plurality of second dummy patterns DPS2 surrounded (e.g., around a periphery thereof) by the second electrode 220. The boundary dummy patterns BDP, the first dummy patterns DPS1, and the second dummy patterns DPS2 will be described in more detail below.

The third electrode 230 may include a plurality of second division electrodes 230-dp spaced apart from each other in the second direction DR2. Each of the second division electrodes 230-dp may extend in the first direction DR1. When viewed in the third direction DR3 (e.g., in a plan view), the third electrode 230 may overlap with at least a portion of the first electrode 210, and may not overlap with the concave portions CCP of the first electrode 210 and the protruding portions PTP of the second electrode 220.

Referring to FIGS. 8 and 9A, one second loop trace line 230rt2 may be electrically connected to one first electrode group 230pc. The one first electrode group 230pc may include two third electrodes 230. In this case, one second loop trace line 230rt2 may be electrically connected to six second division electrodes 230-dp. Accordingly, an extent to which the number of pads in the sensor layer 200 increases may be reduced.

The fourth electrode 240 may include a plurality of third division electrodes 240-dp spaced apart from each other in the first direction DR1. Each of the third division electrodes 240-dp may extend in the second direction DR2. According to an embodiment, when viewed in the third direction DR3 (e.g., in a plan view), the fourth electrode 240 may overlap with at least a portion of the second electrode 220, and may not overlap with the concave portions CCP of the first electrode 210 and the protruding portions PTP of the second electrode 220.

According to some embodiments of the present disclosure, because the first electrode 210 and the second electrode 220 have the serrated shape in an area that does not overlap with the third electrode 230 and the fourth electrode 240, an undesired parasitic capacitance may be prevented or substantially prevented from occurring between each of the first electrode 210 and the second electrode 220 and each of the third electrode 230 and the fourth electrode 240. Accordingly, a pen sensitivity and a touch sensitivity of the electronic device 1000 (e.g., refer to FIG. 2A) may be improved.

Each of the third division electrodes 240-dp may include a plurality of second patterns 241 spaced apart from each other in the second direction DR2, and a plurality of second bridge patterns 242 electrically connected to the second patterns 241. The second patterns 241 and the second bridge patterns 242 may be electrically connected to each other via contact holes defined through (e.g., penetrating) the first insulating layer 203 (e.g., refer to FIG. 7A). Two second patterns 241 that are adjacent to each other may be spaced apart from each other, such that one second division electrode 230-dp and two first bridge patterns 212 are arranged between the two second patterns 241 that are adjacent to each other.

In an embodiment, the first conductive layer SU202 may include a plurality of dummy patterns DPS surrounded (e.g., around a periphery thereof) by the third electrode 230 and the fourth electrode 240. The dummy patterns DPS may not overlap with the third electrode 230 and the fourth electrode 240. The dummy patterns DPS may be electrically insulated by a plurality of dummy boundary lines DBL arranged between the dummy patterns DPS.

In an embodiment, the third electrode 230, the second patterns 241 of the fourth electrode 240, and the first bridge patterns 212 of the first electrode 210 may be disposed at (e.g., in or on) the first conductive layer SU202, and the first patterns 211 of the first electrode 210, the second electrode 220, and the second bridge patterns 242 of the fourth electrode 240 may be disposed at (e.g., in or on) the second conductive layer SU204.

FIGS. 9A and 9B illustrate a structure in which one sensing unit SU includes three first division electrodes 220-dp, three second division electrodes 230-dp, and three third division electrodes 240-dp as a representative example, but the present disclosure is not particularly limited thereto or thereby. As an example, each of the number of the first division electrodes 220-dp, the number of the second division electrodes 230-dp, and the number of the third division electrodes 240-dp, which are included in one sensing unit SU, may be one, two, or four or more.

According to an embodiment, a first capacitor may be defined between the first electrode 210 and the third electrode 230, and a second capacitor may be defined between the second electrode 220 and the fourth electrode 240. A first capacitance of the first capacitor and a second capacitance of the second capacitor may be adjusted by the overlapping area between the first electrode 210 and the third electrode 230 and the overlapping area between the second electrode 220 and the fourth electrode 240.

As the first and second capacitances increase, an amount of an induced current transferred from the third electrode 230 to the first electrode 210 may increase, and an amount of an induced current transferred from the fourth electrode 240 to the second electrode 220 may increase. Accordingly, as the first and second capacitances increase, a pen sensing performance of the sensor layer 200 may be improved. In addition, during a touch sensing mode, the first and second capacitances may act as a load. Therefore, as the first and second capacitances decrease, a touch sensing performance may be improved.

According to the present embodiment, the overlapping area between the first electrode 210 and the third electrode 230 and the overlapping area between the second electrode 220 and the fourth electrode 240 may be easily adjusted. Thus, the sensor layer 200 may have capacitances at levels appropriate for both a touch sensitivity and a pen-detection sensitivity. As a result, the pen sensitivity and the touch sensitivity of the electronic device 1000 (e.g., refer to FIG. 2A) may be improved.

According to the present embodiment, in the second conductive layer SU204 within one sensing unit SU, an area occupied by the components included in the first electrode 210 and the second electrode 220 may be larger than an area occupied by the components included in the third electrode 230 and the fourth electrode 240. A change in capacitance caused by the first input 2000 (e.g., refer to FIG. 4) may be larger as the distance decreases. Accordingly, the components to sense the first input 2000 may be arranged with a relatively larger area in a layer that is adjacent to the surface of the electronic device 1000 (e.g., refer to FIG. 1A). As a result, the touch performance may be improved.

Referring to FIGS. 9A, 9B, and 10, each of the first, second, third, and fourth electrodes 210, 220, 230, and 240 may have a mesh structure. The mesh structure may be a structure through which a plurality of openings 200OP is defined. FIG. 10 illustrates the openings 200OP, each having a circular shape with a suitable curvature (e.g., a selected or predetermined curvature) as a representative example, but the present disclosure is not particularly limited thereto or thereby. As an example, each of the openings 200OP may have a variety of suitable shapes, such as a square shape, a polygonal shape, or an irregular shape.

FIG. 10 illustrates a portion of each of the first pattern 211, the second bridge pattern 242, and the second electrode 220, which are arranged in the second conductive layer SU204. The first pattern 211, the second bridge pattern 242, and the second electrode 220 may be electrically insulated from one another. As an example, the first pattern 211, the second bridge pattern 242, and the second electrode 220 may be electrically insulated from one another by a first line CLa extending in a first cross direction CDR1 crossing the first direction DR1 and the second direction DR2, and a second line CLb extending in a second cross direction CDR2 crossing the first cross direction CDR1. One portion of the conductive layer and another portion of the conductive layer may be spaced apart from each other, and the first line CLa and the second line CLb may be arranged between the one portion and the other portion of the conductive layer.

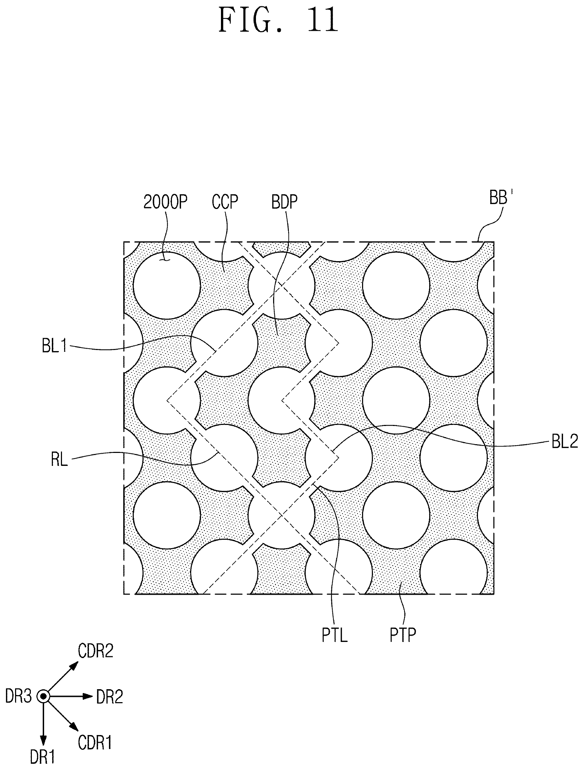

FIG. 11 is an enlarged plan view of the area BB' shown in FIG. 9B. Similar to FIG. 10, the mesh structure is depicted.

FIG. 11 illustrates a portion of one concave portion CCP, a portion of the boundary dummy patterns BDP disposed between the one concave portion CCP and one protruding portion PTP, and a portion of the one protruding portion PTP, which are arranged in the second conductive layer SU204.

Referring to FIGS. 9A, 9B, and 11, the concave portion CCP, the boundary dummy patterns BDP, and the protruding portion PTP may be electrically insulated from one another. For example, the concave portion CCP and the protruding portion PTP may be electrically insulated from each other by the boundary dummy patterns BDP disposed between the concave portion CCP and the protruding portion PTP. In addition, the concave portion CCP may be electrically insulated from the boundary dummy patterns BDP by a first boundary line BL1 located between the concave portion CCP and the boundary dummy patterns BDP. The protruding portion PTP may be electrically insulated from the boundary dummy patterns BDP by a second boundary line BL2 located between the protruding portion PTP and the boundary dummy patterns BDP. According to some embodiments of the present disclosure, because the boundary dummy patterns BDP are formed, even when foreign substances are present between the first electrodes 210 and the second electrodes 220, the foreign substances may overlap with the boundary dummy patterns BDP, and thus, a short circuit between the first electrodes 210 and the second electrodes 220 that may be caused by the foreign substances may be prevented or substantially prevented.

According to an embodiment, each of the boundary dummy patterns BDP may include a reference line RL extending in a direction (e.g., a selected or predetermined direction), and a protruding line PTL intersecting or crossing the reference line RL and protruding from the reference line RL. As an example, one of the boundary dummy patterns BDP illustrated in FIG. 11 may include the reference line RL extending along the first cross direction CDR1, and the protruding line PTL extending along the second cross direction CDR2. However, the present disclosure is not limited thereto, and the extending directions of the reference line RL and the protruding line PTL may be variously modified as needed or desired.

According to an embodiment, each of the boundary dummy patterns BDP may be formed without the opening 200OP surrounded (e.g., around a periphery thereof) by the mesh lines. According to some embodiments of the present disclosure, because the boundary dummy patterns BDP are formed with a minimum or reduced size that does not include the opening 200OP, changes in the areas of the first electrodes 210 and the second electrodes 220 may be reduced. Accordingly, variations in the first capacitance that may be caused by the overlapping area between the first electrodes 210 and the third electrodes 230 and variations in the second capacitance that may be caused by the overlapping area between the second electrodes 220 and the fourth electrodes 240 may be reduced. Therefore, the pen sensitivity and the touch sensitivity of the electronic device 1000 (e.g., refer to FIG. 2A) may be improved.

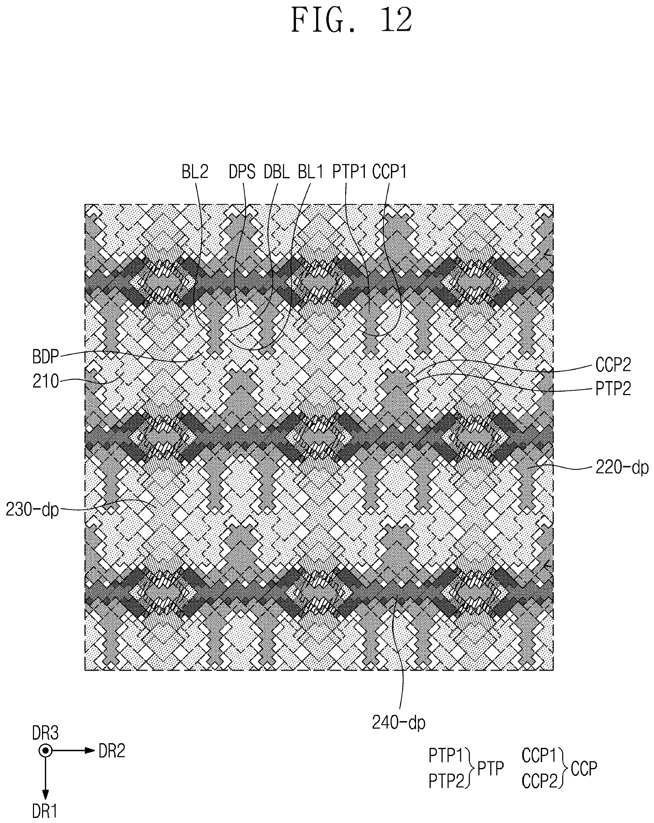

FIG. 12 is a plan view of a structure in which the first conductive layer SU202 and the second conductive layer SU204 of the sensing unit SU overlap with each other according to an embodiment of the present disclosure. In FIG. 12, the same reference numerals denote the same elements as those described above with reference to FIG. 9A and 9B, and thus, redundant description thereof may not be repeated hereinafter.

FIG. 12 illustrates some (e.g., only some) of the components illustrated in FIGS. 9A and 9B.

Referring to FIGS. 9A, 9B, and 12, the first electrode 210 may overlap with a portion of the third electrode 230, and the second electrode 220 may overlap with a portion of the fourth electrode 240.

According to some embodiments of the present disclosure, the concave portions CCP and the protruding portions PTP may overlap with the dummy patterns DPS. In addition, the boundary dummy patterns BDP between each of the concave portions CCP and each of the protruding portions PTP may overlap with the dummy patterns DPS.

In more detail, the first boundary lines BL1 between the concave portions CCP and the boundary dummy patterns BDP and the second boundary lines BL2 between the protruding portions PTP and the boundary dummy patterns BDP may overlap with at least a portion of the dummy boundary lines DBL between the dummy patterns DPS. In other words, cutting lines between the concave portions CCP and the boundary dummy patterns BDP and the cutting lines between the protruding portions PTP and the boundary dummy patterns BDP may be aligned with cutting lines between the dummy patterns DPS.

According to some embodiments of the present disclosure, the first electrode 210 and the second electrode 220 may include the concave portions CCP and the protruding portions PTP protruding to engage with the concave portions CCP in areas that do not overlap with the third electrode 230 and the fourth electrode 240. Accordingly, the first electrode 210 and the second electrode 220 may have the serrated shape, and may be arranged to engage with each other in the areas that do not overlap with the third electrode 230 and the fourth electrode 240. When the first electrode 210 and the second electrode 220 have the serrated shape, the engaging areas between the first electrode 210 and the second electrode 220 may increase, and the effective coupling area between the first electrode 210 and the second electrode 220 may increase. As a result, the variation in a capacitance between the first electrode 210 and the second electrode 220 may increase.

In addition, because the first electrode 210 and the second electrode 220 have the serrated shape in the areas that do not overlap with the third electrode 230 and the fourth electrode 240, an undesired parasitic capacitance may be prevented or substantially prevented from occurring between each of the first electrode 210 and the second electrode 220 and each of the third electrode 230 and the fourth electrode 240. Accordingly, the pen sensitivity and the touch sensitivity of the electronic device 1000 (e.g., refer to FIG. 2A) may be improved.

According to some embodiments of the present disclosure, because the cutting lines between the concave portions CCP and the boundary dummy patterns BDP and the cutting lines between the protruding portions PTP and the boundary dummy patterns BDP are aligned with a portion of the cutting lines between the dummy patterns DPS, an interlayer parasitic capacitance between each of the first electrode 210 including the concave portions CCP, the second electrode 220 including the protruding portions PTP, and the boundary dummy patterns BDP and a respective corresponding one of the dummy patterns DPS may be reduced. As an example, an electric field distribution in each of different layers may be uniformly adjusted by the same cutting lines. Accordingly, the parasitic capacitance between the first electrode 210 including the concave portions CCP and the corresponding dummy patterns DPS, the parasitic capacitance between the second electrode 220 including the protruding portions PTP and the corresponding dummy patterns DPS, and the parasitic capacitance between the boundary dummy patterns BDP and the corresponding dummy patterns DPS may be reduced.

According to some embodiments of the present disclosure, the first dummy patterns DPS1 may overlap with the third electrodes 230. The second dummy patterns DPS2 may overlap with the fourth electrodes 240. However, the present disclosure is not limited thereto or thereby, and the first dummy patterns DPS1 and the second dummy patterns DPS2 may be omitted as needed or desired.

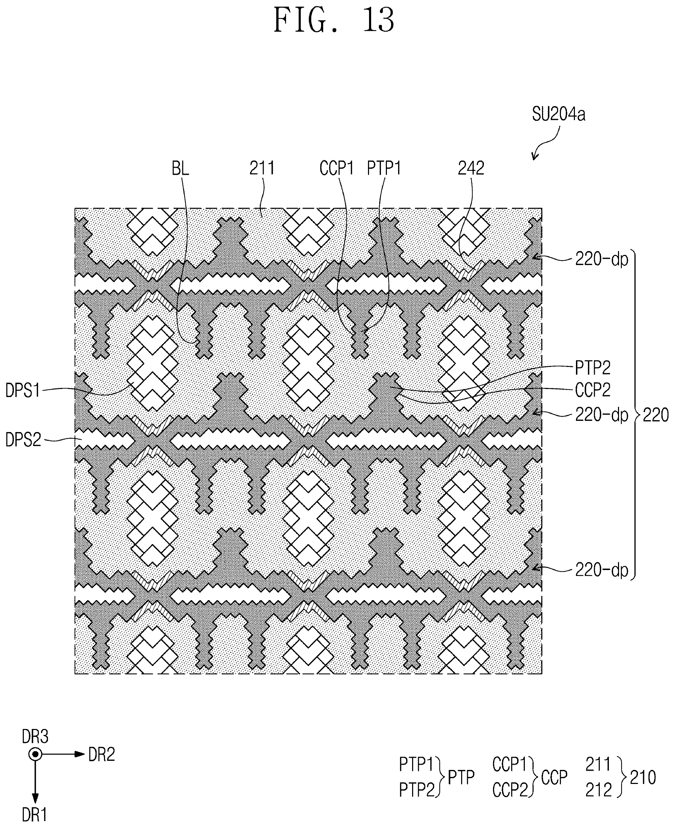

FIG. 13 is a plan view of a second conductive layer SU204a of a sensing unit SU according to an embodiment of the present disclosure. In FIG. 13, the same reference numerals denote the same elements as those described above with reference to FIG. 9B, and thus, redundant description thereof may not be repeated hereinafter. Hereinafter with reference to FIG. 13, the differences from those of FIG. 9B may be mainly described in more detail.

Referring to FIGS. 9A and 13, the boundary dummy patterns BDP may be omitted when compared to FIG. 9B. Accordingly, a first electrode 210 and a second electrode 220 may be electrically insulated from each other by boundary lines BL. In other words, concave portions CCP and protruding portions PTP may be electrically insulated from each other by the boundary lines BL.

According to an embodiment, the boundary lines BL between the first electrode 210 and the second electrode 220 may overlap with at least a portion of dummy boundary lines DBL between dummy patterns DPS. Accordingly, the boundary lines BL between the concave portions CCP and the protruding portions PTP may overlap with at least a portion of the dummy boundary lines DBL between the dummy patterns DPS. In other words, cutting lines between the concave portions CCP and the protruding portions PTP may be aligned with a portion of cutting lines between the dummy patterns DPS.

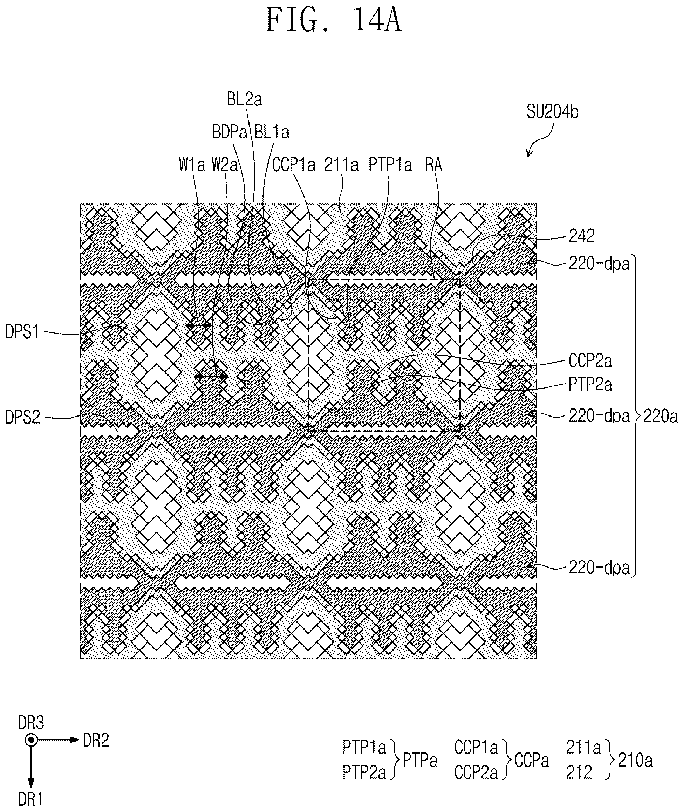

FIG. 14A is a plan view of a second conductive layer SU204b of a sensing unit SU according to an embodiment of the present disclosure. In FIG. 14A, the same reference numerals denote the same elements as those described above with reference to FIG. 9B, and thus, redundant description thereof may not be repeated hereinafter. Hereinafter with reference to FIG. 14A, the different features from those of FIG. 9B may be mainly described in more detail.

Referring to FIGS. 9A and 14A, the number of first concave portions CCP1a may be greater than the number of second concave portions CCP2a. As an example, in a reference area RA, the number of the first concave portions CCP1a included in a single first pattern 211a may be three, and the number of the second concave portions CCP2a included in the single first pattern 211a may be two. Accordingly, the number of first protruding portions PTP1a corresponding to the first concave portions CCP1a in a one-to-one correspondence may be three, and the number of second protruding portions PTP2a corresponding to the second concave portions CCP2a in a one-to-one correspondence may be two.

According to the present embodiment, a maximum width W1a in the second direction DR2 of each of the first concave portions CCP1a may be smaller than a maximum width W2a in the second direction DR2 of each of the second concave portions CCP2a. However, the present disclosure is not limited thereto, and the widths of the first concave portions CCP1a and the second concave portions CCP2a may be variously modified as needed or desired.

According to the present embodiment, each of the second concave portions CCP2a may be disposed between two first concave portions CCP1a that are adjacent to each other among the first concave portions CCP1a. However, the present disclosure is not limited thereto or thereby, and the arrangement relationship between the first concave portions CCP1a and the second concave portions CCP2a may be variously modified.

According to the present embodiment, boundary dummy patterns BDPa may be arranged between concave portions CCPa and protruding portions PTPa. In this case, first boundary lines BL1a between the concave portions CCPa and the boundary dummy patterns BDPa and second boundary lines BL2a between the protruding portions PTPa and the boundary dummy patterns BDPa may overlap with at least a portion of dummy boundary lines DBL between dummy patterns DPS.

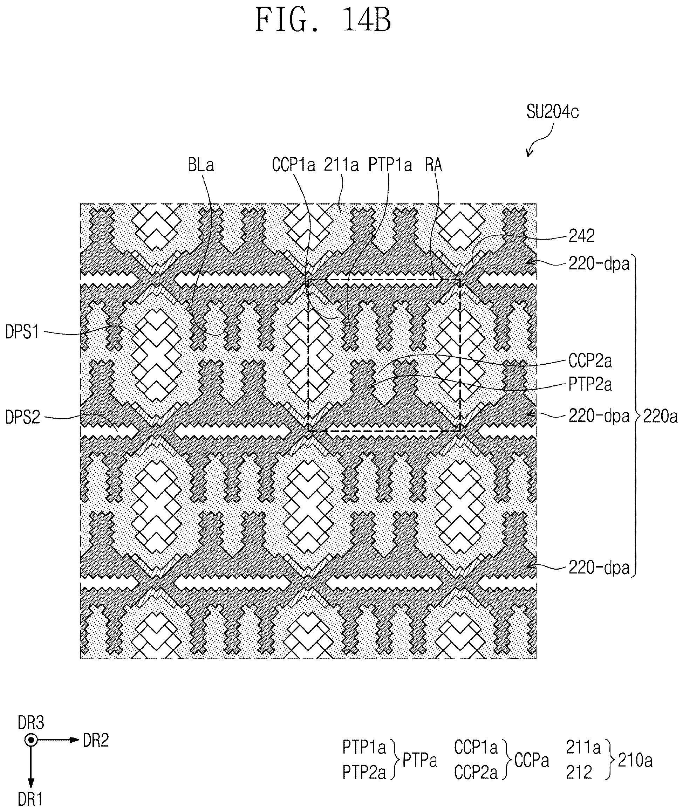

FIG. 14B is a plan view of a second conductive layer SU204c of a sensing unit SU according to an embodiment of the present disclosure. In FIG. 14B, the same reference numerals denote the same elements as those described above with reference to FIG. 14B, and thus, redundant description thereof may not be repeated hereinafter. Hereinafter with reference to FIG. 14B, the different features from those of FIG. 14A may be described in more detail.

Referring to FIGS. 9A and 14B, the boundary dummy patterns BDPa may be omitted when compared to FIG. 14A. Accordingly, a first electrode 210a and a second electrode 220a may be electrically insulated from each other by a boundary line BLa.

According to the present embodiment, the boundary line BLa between the first electrode 210a and the second electrode 220a may overlap with at least a portion of dummy boundary lines DBL arranged between dummy patterns DPS.

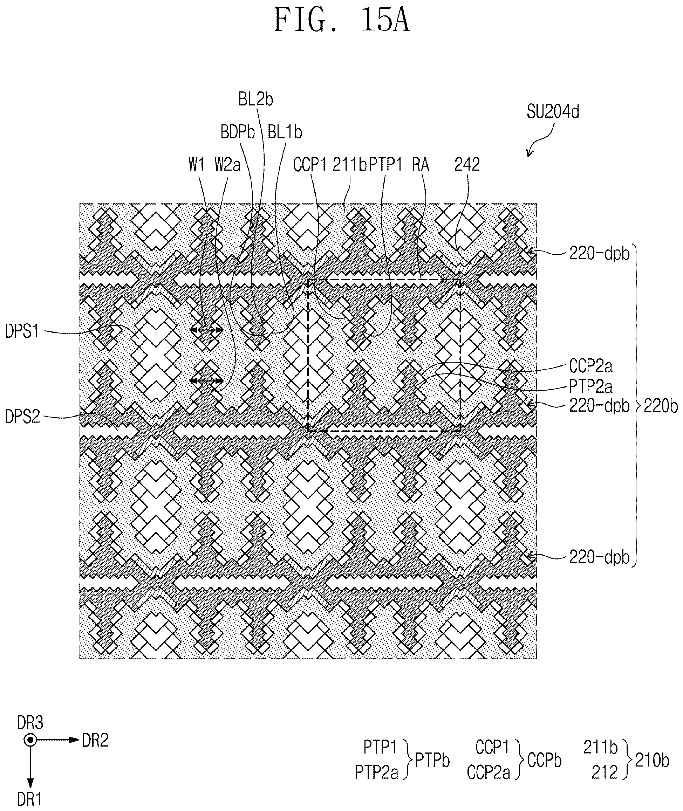

FIG. 15A is a plan view of a second conductive layer SU204d of a sensing unit SU according to an embodiment of the present disclosure. In FIG. 15A, the same reference numerals denote the same elements as those described above with reference to FIG. 9B, and thus, redundant description thereof may not be repeated hereinafter. Hereinafter with reference to FIG. 15A, the different features from those of FIG. 9B may be described in more detail.

Referring to FIG. 15A, the number of first concave portions CCP1 may be equal to the number of second concave portions CCP2a. As an example, in a reference area RA, each of the number of the first concave portions CCP1 included in a single first pattern 211b and the number of the second concave portions CCP2a included in the single first pattern 211b may be two. Accordingly, the number of first protruding portions PTP1 corresponding to the first concave portions CCP1 in a one-to-one correspondence may be two, and the number of second protruding portions PTP2a corresponding to the second concave portions CCP2a in a one-to-one correspondence may be two.

According to the present embodiment, a maximum width W1 in the second direction DR2 of each of the first concave portions CCP1 may be the same as a maximum width W2a in the second direction DR2 of each of the second concave portions CCP2a.

According to the present embodiment, the first concave portions CCP1 may overlap with or face the second concave portions CCP2a in the first direction DR1. In other words, the first concave portions CCP1 and the second concave portions CCP2a may be symmetrical or substantially symmetrical to each other with respect to a virtual line extending in the second direction DR2.

According to the present embodiment, boundary dummy patterns BDPb may be arranged between concave portions CCPb and protruding portions PTPb. In this case, a first boundary line BL1b arranged between the concave portions CCPb and the boundary dummy patterns BDPb and a second boundary line BL2b arranged between the protruding portions PTPb and the boundary dummy patterns BDPb, may overlap with at least a portion of the dummy boundary lines DBL arranged between the dummy patterns DPS.

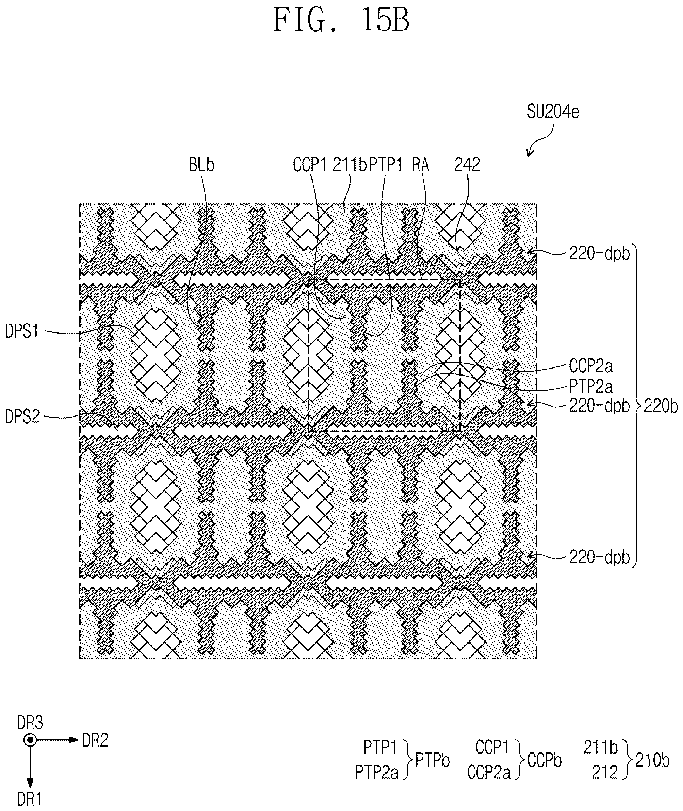

FIG. 15B is a plan view of a second conductive layer SU204e of a sensing unit SU according to an embodiment of the present disclosure. In FIG. 15B, the same reference numerals denote the same elements as those described above with reference to FIG. 15A, and thus, redundant description thereof may not be repeated hereinafter. Hereinafter with reference to FIG. 15B, the different features from those of FIG. 15A may be described in more detail.

Referring to FIG. 15B, the boundary dummy patterns BDPb may be omitted when compared to FIG. 15A. Accordingly, a first electrode 210b and a second electrode 220b may be electrically insulated from each other by a boundary line BLb.

According to the present embodiment, the boundary line BLb between the first electrode 210b and the second electrode 220b may overlap with at least a portion of dummy boundary lines DBL arranged between dummy patterns DPS.

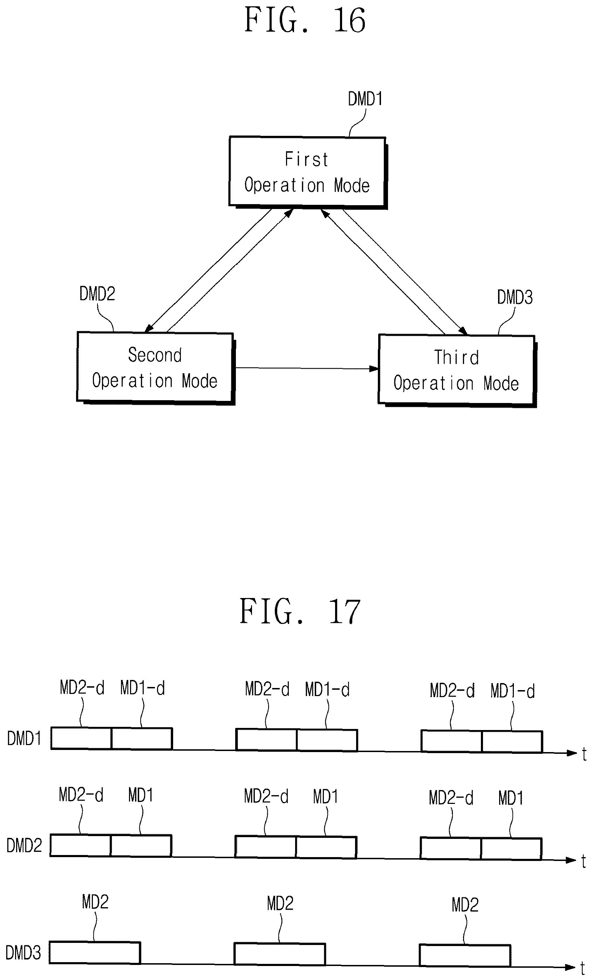

FIG. 16 is a schematic view illustrating an operation of the sensor driver 200C according to an embodiment of the present disclosure.

Referring to FIGS. 6 and 16, the sensor driver 200C may be selectively driven in one of a first operation mode DMD1, a second operation mode DMD2, and a third operation mode DMD3.

The first operation mode DMD1 may be referred to as a touch and pen standby mode, the second operation mode DMD2 may be referred to as a touch active and pen standby mode, and the third operation mode DMD3 may be referred to as a pen active mode. The first operation mode DMD1 may be a mode that waits for the first input 2000 and the second input 3000. The second operation mode DMD2 may be a mode that senses the first input 2000, and waits for the second input 3000. The third operation mode DMD3 may be a mode that senses the second input 3000.

According to the embodiment, the sensor driver 200C may be first driven in the first operation mode DMD1. When the first input 2000 is sensed in the first operation mode DMD1, the driving mode of the sensor driver 200C may be switched (or changed) to the second operation mode DMD2. According to the present embodiment, when the second input 3000 is sensed in the first operation mode DMD1, the driving mode of the sensor driver 200C may be switched (or changed) to the third operation mode DMD3.

According to the present embodiment, when the second input 3000 is sensed in the second operation mode DMD2, the driving mode of the sensor driver 200C may be switched (or changed) to the third operation mode DMD3. When the first input 2000 is released (or not sensed) in the second operation mode DMD2, the driving mode of the sensor driver 200C may be switched (or changed) to the first operation mode DMD1. When the second input 3000 is released (or not sensed) in the third operation mode DMD3, the driving mode of the sensor driver 200C may be switched (or changed) to the first operation mode DMD1.

FIG. 17 is a schematic view illustrating an operation of the sensor driver 200C according to an embodiment of the present disclosure.

Referring to FIGS. 6, 16, and 17, the operations in the first, second, and third operation modes DMD1, DMD2, and DMD3 are illustrated in the order of time t.

In the first operation mode DMD1, the sensor driver 200C may be repeatedly driven in a second mode MD2-d and a first mode MD1-d. During the second mode MD2-d, the sensor layer 200 may be scan-driven to sense the second input 3000. During the first mode MD1-d, the sensor layer 200 may be scan-driven to sense the first input 2000. FIG. 17 illustrates the sensor driver 200C operating in the first mode MD1-d after the second mode MD2-d, but the operating order of the sensor driver 200C is not limited thereto or thereby.

In the second operation mode DMD2, the sensor driver 200C may be repeatedly driven in the second mode MD2-d and a first mode MD1. During the second mode MD2-d, the sensor layer 200 may be scan-driven to sense the second input 3000. During the first mode MD1, the sensor layer 200 may be scan-driven to detect coordinates of the input by the first input 2000.

In the third operation mode DMD3, the sensor driver 200C may be driven in a second mode MD2. During the second mode MD2, the sensor layer 200 may be scan-driven to detect coordinates of the input by the second input 3000. In the third operation mode DMD3, the sensor driver 200C may not be driven in the first mode MD1-d or MD1 until the second input 3000 is released (or not sensed).

Referring also to FIG. 8, the third electrodes 230 and the fourth electrodes 240 may all be grounded, or may receive a constant voltage in the first mode MD1-d and the first mode MD1. As another example, both the third electrodes 230 and the fourth electrodes 240 may be floated (or electrically floated) in the first mode MD1-d and the first mode MD1. As another example, a signal that is in-phase with a transmission signal provided to the first electrodes 210 may be applied to the third electrodes 230 and the fourth electrodes 240 in the first mode MD1-d and the first mode MD1. In this case, a touch noise may be prevented or substantially prevented from entering through the third electrodes 230 and the fourth electrodes 240.

In the second mode MD2-d and the second mode MD2, one ends of the third electrodes 230 and one ends of the fourth electrodes 240 may all be floated. In addition, in the second mode MD2-d and the second mode MD2, other ends of the third electrodes 230 and other ends of the fourth electrodes 240 may all be grounded or floated. Accordingly, a compensation for the sensing signal may be improved or maximized by the coupling between the first electrodes 210 and the third electrodes 230 and the coupling between the second electrodes 220 and the fourth electrodes 240.

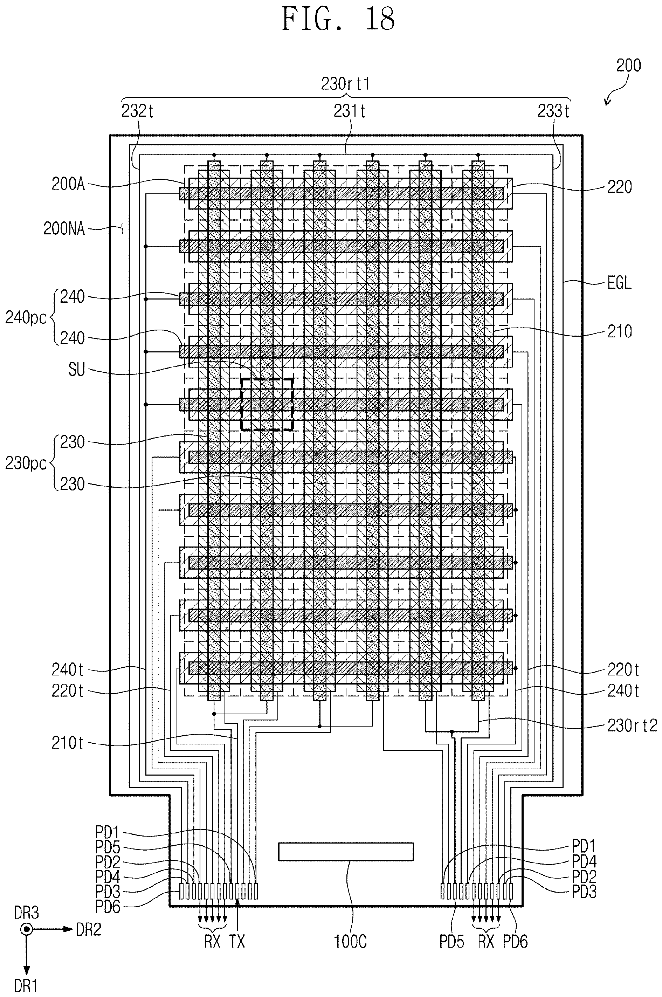

FIG. 18 is a schematic view illustrating the first modes MD1-d and MD1 according to an embodiment of the present disclosure.

Referring to FIGS. 6, 17, and 18, the first mode MD1-d of the first operation mode DMD1 and the first mode MD1 of the second operation mode DMD2 may include a mutual capacitance detection mode. FIG. 18 is a view illustrating the mutual capacitance detection mode in the first mode MD1-d of the first operation mode DMD1 and the first mode MD1 of the second operation mode DMD2.

In the mutual capacitance detection mode, the sensor driver 200C may sequentially apply a transmission signal TX to the first electrodes 210, and may detect coordinates of the first input 2000 using a reception signal RX detected through the second electrodes 220. As an example, the sensor driver 200C may sense a variation in a mutual capacitance between the first electrodes 210 and the second electrodes 220 to calculate input coordinates. As another example, the sensor driver 200C may sequentially apply a transmission signal TX to the second electrodes 220, and may detect coordinates of the first input 2000 using a reception signal RX detected through the first electrodes 210.

FIG. 18 illustrates a structure in which the transmission signal TX is applied to one first electrode 210 and the reception signal RX is output from the second electrodes 220 as a representative example. The sensor driver 200C may sense a variation in a capacitance between the first electrode 210 and each of the second electrodes 220 to calculate the input coordinates with respect to the first input 2000.

According to an embodiment of the present disclosure, a transmission signal TX may be sequentially applied to the second electrodes 220, and a reception signal RX may be output from the first electrodes 210. According to an embodiment of the present disclosure, transmission signals, differing from each other in at least one of a frequency or a waveform, may be concurrently (e.g., simultaneously or substantially simultaneously) output to the first electrodes 210 or the second electrodes 220, and the reception signal RX may be output from the first electrodes 210 or the second electrodes 220.

According to an embodiment of the present disclosure, at least one of the first mode MD1-d of the first operation mode DMD1 and/or the first mode MD1 of the second operation mode DMD2 may further include a self-capacitance detection mode. The sensor driver 200C may output driving signals to the first electrodes 210 and the second electrodes 220 in the self-capacitance detection mode, and may sense a variation in a capacitance of each of the first electrodes 210 and each of the second electrodes 220 to calculate input coordinates.

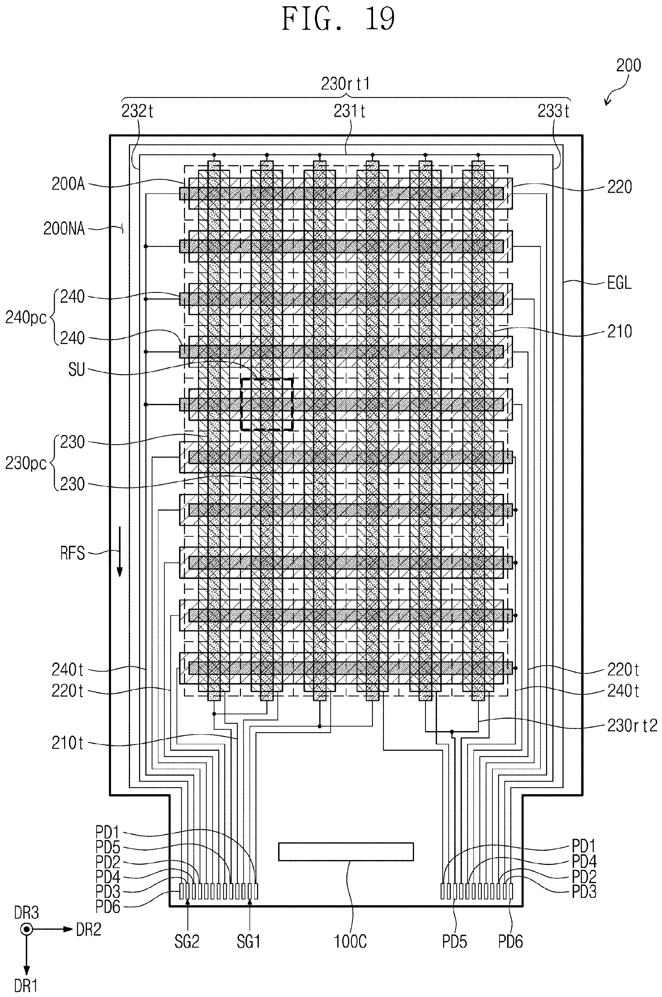

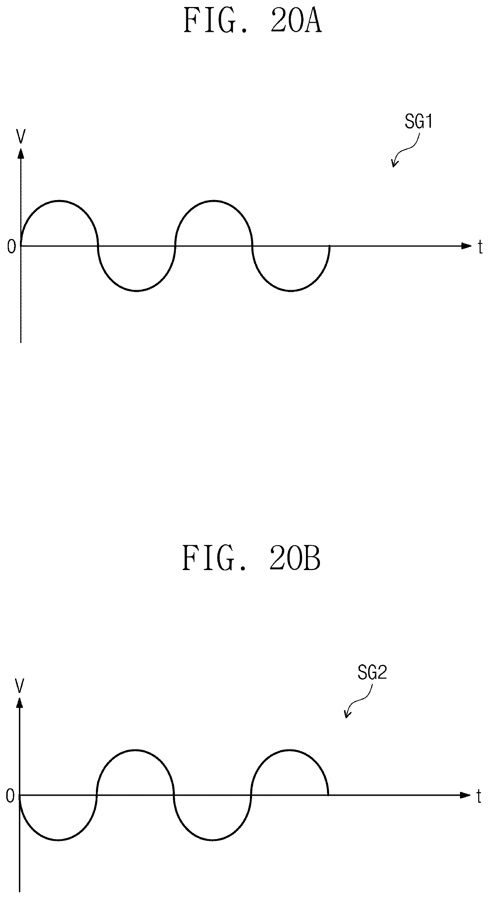

FIG. 19 is a schematic view illustrating the second mode according to an embodiment of the present disclosure. FIG. 20A is a graph illustrating a waveform of a first signal SG1 according to an embodiment of the present disclosure. FIG. 20B is a graph illustrating a waveform of a second signal SG2 according to an embodiment of the present disclosure.

Referring to FIGS. 19, 20A, and 20B, the second mode MD2 may include a charge driving mode. The charge driving mode may include a searching charge driving mode and a tracking charge driving mode. The searching charge driving mode may be omitted as needed or desired.

The searching charge driving mode may be a driving mode before sensing a position of the pen PN. Accordingly, the first signal SG1 or the second signal SG2 may be sequentially applied to all channels included in the sensor layer 200. In other words, the entire area of the sensor layer 200 may be sequentially scanned in the searching charge driving mode. When the pen PN is sensed in the searching charge driving mode, the sensor layer 200 may be driven in the tracking charge driving mode. As an example, in the tracking charge driving mode, the sensor driver 200C may sequentially apply the first signal SG1 and the second signal SG2 to an area overlapping with a location where the pen PN is sensed, rather than to the entire sensor layer 200.

In the charge driving mode, the sensor driver 200C may apply the first signal SG1 to one of the third pads PD3 and/or the fifth pads PD5, and may apply the second signal SG2 to another of the third pads PD3 and/or the fifth pads PD5. The second signal SG2 may be a phase-inverted signal of the first signal SG1. As an example, the first signal SG1 may be a sinusoidal signal.

Because the first signal SG1 and the second signal SG2 are applied to at least two pads, a current RFS may have a current path flowing from one pad to another pad. Because the first signal SG1 and the second signal SG2 are sinusoidal signals having an inverted phase from each other, directions of the current RFS may change periodically. According to an embodiment of the present disclosure, the first signal SG1 and the second signal SG2 may be square wave signals having an inverted phase from each other.

When the first signal SG1 and the second signal SG2 have an inverted phase from each other, a noise induced in the display layer 100 (e.g., refer to FIG. 4) by the first signal SG1 may be canceled out by a noise induced by the second signal SG2. Accordingly, a flicker phenomenon may be prevented or substantially prevented from occurring in the display layer 100, and a display quality of the display layer 100 may be improved.

According to an embodiment of the present disclosure, the first signal SG1 may be the sinusoidal signal, but the present disclosure is not limited thereto or thereby, and the first signal SG1 may be the square wave signal. The second signal SG2 may have a constant voltage. As an example, the second signal SG2 may be a ground voltage. In other words, the pad to which the second signal SG2 is applied may be considered as grounded. Even in this case, the current RFS may flow from one pad to another pad. In addition, even when another pad is grounded, the direction of the current RFS may change periodically, because the first signal SG1 is the sinusoidal signal or the square wave signal.

FIG. 19 illustrates a structure in which the second signal SG2 is provided to one third pad PD3 connected to one first loop trace line 230rt1, and the first signal SG1 is provided to one fifth pad PD5 connected to the third electrode 230. The current RFS may flow through the current path defined by the fifth pad PD5, the second loop trace line 230rt2 connected to the fifth pad PD5, the third electrode 230, a portion of the first loop trace line 230rt1 connected to the third pad PD3, and the third pad PD3. The current path may have a coil shape. Accordingly, a resonant circuit of the pen PN may be charged by the current path in the charge driving mode of the second mode.

According to some embodiments of the present disclosure, the current path of the loop coil pattern may be implemented by the components included in the sensor layer 200. Accordingly, the electronic device 1000 (e.g., refer to FIG. 2A) may charge the pen PN using the sensor layer 200. Therefore, because a separate component having a coil to charge the pen PN may not need to be additionally provided, an increase in a thickness or a weight of the electronic device 1000 or a decrease in a flexibility due to the addition of the separate component may be prevented.

In the charge driving mode, the first electrodes 210, the second electrodes 220, and the fourth electrodes 240 may be grounded, may receive a constant voltage, or may be electrically floated. In more detail, the first electrodes 210, the second electrodes 220, and the fourth electrodes 240 may be floated. In this case, the current RFS may not flow through the first electrodes 210, the second electrodes 220, and the fourth electrodes 240.

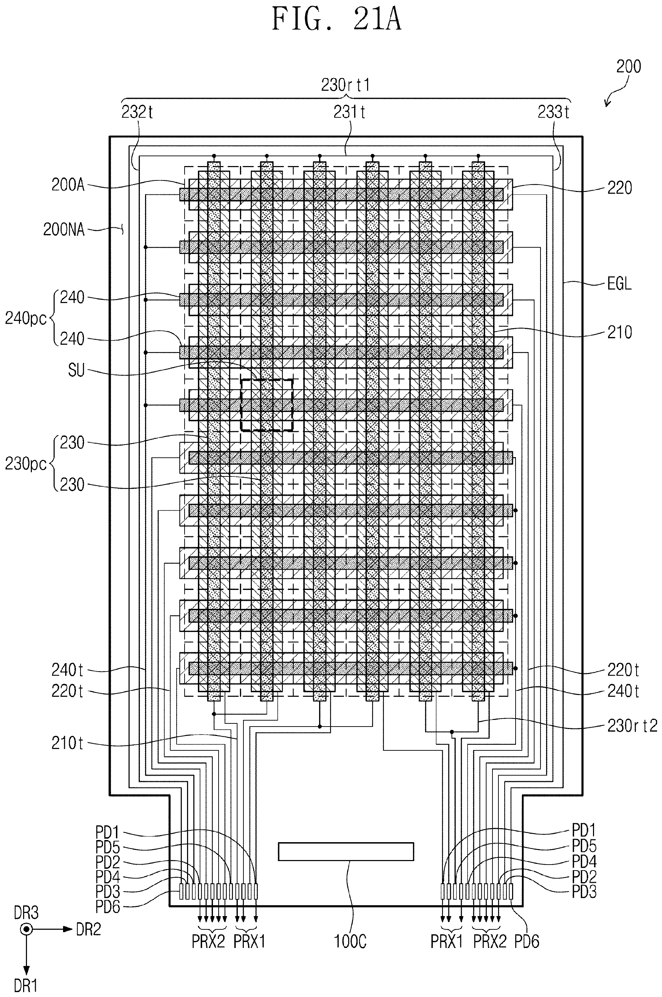

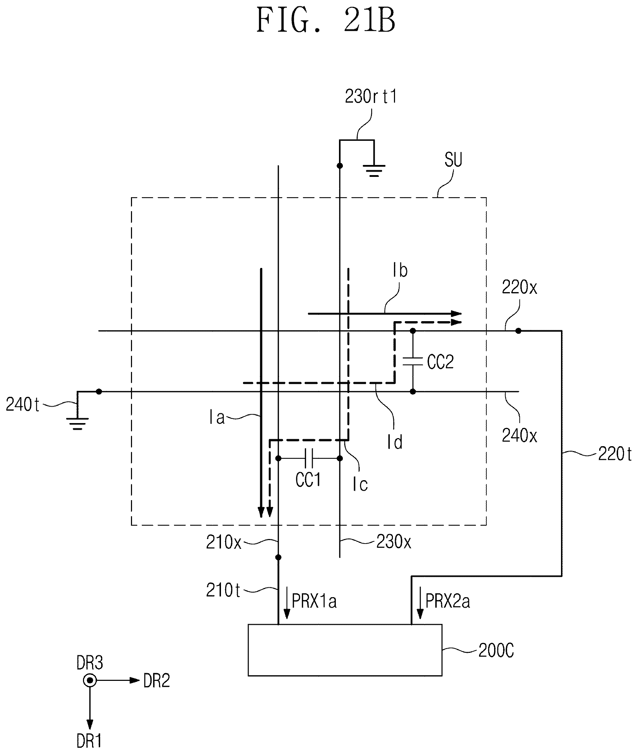

FIG. 21A is a schematic view illustrating the second mode according to an embodiment of the present disclosure. FIG. 21B is a schematic view illustrating the second mode with respect to one sensing unit according to an embodiment of the present disclosure.

Referring to FIGS. 21A and 21B, the second mode may include the charge driving mode and a pen sensing driving mode. FIGS. 21A and 21B are views illustrating the pen sensing driving mode.

Referring to FIG. 21A, in the pen sensing driving mode, first reception signals PRX1 may be output from the first electrodes 210, and second reception signals PRX2 may be output from the second electrodes 220. FIG. 21B illustrates one sensing unit SU through which first, second, third, and fourth induced currents Ia, Ib, Ic, and Id generated by a pen PN (e.g., refer to FIG. 2A) flow.

Referring to FIGS. 21A and 21B, a routing direction of one electrode and a routing direction of another electrode, which overlaps with the one electrode, of a sensor layer 200 may be different from each other. As an example, a routing direction of a first electrode 210x and a routing direction of a third electrode 230x may be different from each other. In addition, a routing direction of a second electrode 220x and a routing direction of a fourth electrode 240x may be different from each other. As an example, as shown in FIG. 21B, the first electrode 210x and a first trace line 210t may be connected to each other at a lower side of the sensing unit SU, and the third electrode 230x and the first loop trace line 230rt1 may be connected to each other at an upper side of the sensing unit SU. The second electrode 220x and the second trace line 220t may be connected to each other at a right side of the sensing unit SU, and the fourth electrode 240x and the auxiliary trace line 240t may be connected to each other at a left side of the sensing unit SU.

An RLC resonant circuit of the pen PN may emit a magnetic field at its resonant frequency while discharging electric charge charged therein. Due to the magnetic field provided from the pen PN, the first induced current Ia may be generated in the first electrode 210x, and the second induced current Ib may be generated in the second electrode 220x. In addition, the third induced current Ic may be generated in the third electrode 230x, and the fourth induced current Id may be generated in the fourth electrode 240x.

A first coupling capacitor CC1 may be formed between the third electrode 230x and the first electrode 210x, and a second coupling capacitor CC2 may be formed between the fourth electrode 240x and the second electrode 220x. The third induced current Ic may be supplied to the first electrode 210x via the first coupling capacitor CC1, and the fourth induced current Id may be supplied to the second electrode 220x via the second coupling capacitor CC2.

A sensor driver 200C may receive a first reception signal PRX1a from the first electrode 210x based on the first induced current Ia and the third induced current Ic, and may receive a second reception signal PRX2a from the second electrode 220x based on the second induced current Ib and the fourth induced current Id. The sensor driver 200C may detect input coordinates of the pen PN based on the first reception signal PRX1a and the second reception signal PRX2a.

The sensor driver 200C may receive the first reception signal PRX1a from the first electrode 210x, and may receive the second reception signal PRX2a from the second electrode 220x. In this case, one end of the third electrode 230x and one end of the fourth electrode 240x may all be floated. Therefore, a compensation for the sensing signal may increase by the coupling between the first electrode 210x and the third electrode 230x and the coupling between the second electrode 220x and the fourth electrode 240x.

In addition, another end of the third electrode 230x and another end of the fourth electrode 240x may be grounded or floated. Accordingly, due to the coupling between the first electrode 210x and the third electrode 230x and the coupling between the second electrode 220x and the fourth electrode 240x, the third induced current Ic and the fourth induced current Id may be sufficiently supplied to the first electrode 210x and the second electrode 220x.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims.

Embodiments are set out in the following clauses:
1. An electronic device comprising:
   a sensor layer comprising a sensing area and a peripheral area adjacent to the sensing area; and
   a sensor driver driving the sensor layer, the sensor layer comprising:
      a first electrode extending in a first direction and comprising a concave portion;
      a second electrode intersecting the first electrode, extending in a second direction intersecting the first direction, and comprising a protruding portion protruded to engage with the concave portion;
      a third electrode that overlaps a portion of the first electrode and does not overlap the concave portion and the protruding portion; and
      a fourth electrode that overlaps a portion of the second electrode and does not overlap the concave portion and the protruding portion.
2. The electronic device of clause 1, wherein each of the concave portion and the protruding portion is provided in plurality, the plurality of concave portions comprise a plurality of first concave portions recessed in the first direction and a plurality of second concave portions recessed in a direction opposite to the first direction, and the plurality of protruding portions comprise a plurality of first protruding portions protruded to engage with the plurality of first concave portions and a plurality of second protruding portions protruded to engage with the plurality of second concave portions.
3. The electronic device of clause 2, wherein a number of the plurality of first concave portions is greater than a number of the plurality of second concave portions.
4. The electronic device of clause 3, wherein a maximum width in the second direction of each of the plurality of first concave portions is smaller than a maximum width in the second direction of each of the plurality of second concave portions.
5. The electronic device of clause 3 or clause 4, wherein each of the plurality of second concave portions is disposed between two first concave portions adjacent to each other among the plurality of first concave portions.
6. The electronic device of clause 2, wherein a number of the plurality of first concave portions is equal to a number of the plurality of second concave portions.
7. The electronic device of clause 6, wherein a maximum width in the second direction of each of the plurality of first concave portions is equal to a maximum width in the second direction of each of the plurality of second concave portions.
8. The electronic device of any preceding clause 1, wherein the sensor layer further comprises a plurality of dummy patterns overlapping the concave portion and the protruding portion.
9. The electronic device of clause 8, wherein a boundary line between the concave portion and the protruding portion overlaps at least a portion of a plurality of dummy boundary lines between the plurality of dummy patterns.
10. The electronic device of any preceding clause, wherein the sensor layer further comprises a plurality of boundary dummy patterns arranged between the concave portion and the protruding portion.
11. The electronic device of clause 10, wherein each of the plurality of boundary dummy patterns comprises a reference line extending in a selected direction and a protruding line intersecting the reference line and protruded from the reference line.
12. The electronic device of clause 10 or clause 11, wherein the sensor layer further comprises a plurality of dummy patterns overlapping the concave portion, the protruding portion, and the plurality of boundary dummy patterns, and a first boundary line between the concave portion and the plurality of boundary dummy patterns and a second boundary line between the protruding portion and the plurality of boundary dummy patterns overlap at least a portion of a plurality of dummy boundary lines between the plurality of dummy patterns.
13. The electronic device of any preceding clause 1, wherein the first electrode further comprises a plurality of first patterns spaced apart from each other in the first direction and comprising the concave portion and a first bridge pattern electrically connected to the plurality of first patterns, the fourth electrode comprises a plurality of second patterns spaced apart from each other in the second direction and a second bridge pattern electrically connected to the plurality of second patterns, the third electrode, the plurality of second patterns, and the first bridge pattern are arranged in a first layer, and the plurality of first patterns, the second electrode, and the second bridge pattern are arranged in a second layer different from the first layer.
14. The electronic device of any preceding clause 1, wherein the sensor layer further comprises:
   a plurality of first dummy patterns overlapping the third electrode and surrounded by the first electrode; and
   a plurality of second dummy patterns overlapping the fourth electrode and surrounded by the second electrode.
15. An electronic device comprising:
   a sensor layer comprising a sensing area and a peripheral area adjacent to the sensing area; and
   a processor controlling an operation of the sensor layer, the sensor layer comprising:
      a first electrode comprising a plurality of concave portions; and
      a second electrode intersecting the first electrode and comprising a plurality of protruding portions protruded to engage with the plurality of concave portions, wherein the plurality of concave portions comprise a plurality of first concave portions recessed in a first direction and a plurality of second concave portions recessed in a direction opposite to the first direction, and the plurality of protruding portions comprise a plurality of first protruding portions protruded to engage with the plurality of first concave portions and a plurality of second protruding portions protruded to engage with the plurality of second concave portions.
16. The electronic device of clause 15, wherein the sensor layer further comprises a plurality of dummy patterns overlapping the plurality of concave portions and the plurality of protruding portions, and a plurality of boundary lines between the plurality of concave portions and the plurality of protruding portions overlaps at least a portion of a plurality of dummy boundary lines between the plurality of dummy patterns.
17. The electronic device of clause 16, wherein the sensor layer further comprises a plurality of boundary dummy patterns arranged between the plurality of concave portions and the plurality of protrusion portions.
18. The electronic device of clause 17, wherein a plurality of first boundary lines between the plurality of concave portions and the plurality of boundary dummy patterns and a plurality of second boundary lines between the plurality of protruding portions and the plurality of boundary dummy patterns overlap at least a portion of the dummy boundary lines between the plurality of dummy patterns.
19. The electronic device of any of clauses 15 to 18, wherein a number of the plurality of first concave portions is greater than a number of the plurality of second concave portions.
20. The electronic device of any of clauses 15 to 19, wherein a number of the plurality of first concave portions is equal to a number of the plurality of second concave portions.

## Claims

1. An electronic device comprising:
a sensor layer (200) comprising a sensing area (200A), and a peripheral area (200NA) adjacent to the sensing area (200A); and
a sensor driver configured to drive the sensor layer,
wherein the sensor layer (200) comprises:
a first electrode (210) extending in a first direction (DR1), and comprising a concave portion (CCP);
a second electrode (220) crossing the first electrode (210), extending in a second direction (DR2) crossing the first direction (DR1), and comprising a protruding portion (PTP) protruding to engage with the concave portion (CCP);
a third electrode (230) overlapping with a portion of the first electrode (210), and not overlapping with the concave portion (CCP) and the protruding portion (PTP); and
a fourth electrode (240) overlapping with a portion of the second electrode (220), and not overlapping with the concave portion (CCP) and the protruding portion (PTP).

2. The electronic device of claim 1, wherein the concave portion (CCP) comprises a plurality of concave portions, and the protruding portion (PTP) comprises a plurality of protruding portions,
wherein the plurality of concave portions comprise a plurality of first concave portions (CCP1) recessed in the first direction (DR1), and a plurality of second concave portions (CCP2) recessed in a direction opposite to the first direction, and
wherein the plurality of protruding portions comprise a plurality of first protruding portions (PTP1) protruding to engage with the plurality of first concave portions (CCP1), and a plurality of second protruding portions (PTP2) protruding to engage with the plurality of second concave portions (CCP2).

3. The electronic device of claim 2, wherein a number of the plurality of first concave portions (CCP1) is greater than a number of the plurality of second concave portions (CCP2).

4. The electronic device of claim 3, wherein a maximum width (W1) in the second direction (DR2) of each of the plurality of first concave portions (CCP1) is smaller than a maximum width (W2) in the second direction (DR2) of each of the plurality of second concave portions (CCP2).

5. The electronic device of claim 3 or claim 4, wherein each of the plurality of second concave portions (CCP2) is located between two first concave portions (CCP1) adjacent to each other among the plurality of first concave portions (CCP1).

6. The electronic device of claim 2, wherein a number of the plurality of first concave portions (CCP1) is equal to a number of the plurality of second concave portions (CCP2).

7. The electronic device of claim 6, wherein a maximum width (W1) in the second direction (DR2) of each of the plurality of first concave portions (CCP1) is equal to a maximum width (W2a) in the second direction of each of the plurality of second concave portions (CCP2a).

8. The electronic device of any preceding claim, wherein the sensor layer (200) further comprises a plurality of dummy patterns (DPS) overlapping with the concave portion (CCP) and the protruding portion (PTP).

9. The electronic device of claim 8, wherein a boundary line (BL) between the concave portion (CCP) and the protruding portion (PTP) overlaps with at least a portion of a plurality of dummy boundary lines (DBL) between the plurality of dummy patterns (DPS).

10. The electronic device of any preceding claim, wherein the sensor layer (200) further comprises a plurality of boundary dummy patterns (BDP) between the concave portion (CCP) and the protruding portion (PTP).

11. The electronic device of claim 10, wherein each of the plurality of boundary dummy patterns (BDP) comprises a reference line (RL) extending in a direction, and a protruding line (PTL) crossing the reference line (RL) and protruding from the reference line (RL).

12. The electronic device of claim 10 or claim 11, wherein the sensor layer (200) further comprises a plurality of dummy patterns (DPS) overlapping with the concave portion (CCP), the protruding portion (PTP), and the plurality of boundary dummy patterns (BDP), and
wherein a first boundary line (BL1) between the concave portion (CCP) and the plurality of boundary dummy patterns (BDP) and a second boundary line (BL2) between the protruding portion (PTP) and the plurality of boundary dummy patterns (BDP) overlap with at least a portion of a plurality of dummy boundary lines (DBL) between the plurality of dummy patterns (DPS).

13. The electronic device of any preceding claim, wherein the first electrode (210) further comprises a plurality of first patterns (211) spaced from each other in the first direction (DR1) and comprising the concave portion (CCP), and a first bridge pattern (212) electrically connected to the plurality of first patterns (211),
wherein the fourth electrode (214) comprises a plurality of second patterns (241) spaced from each other in the second direction (DR2), and a second bridge (242) pattern electrically connected to the plurality of second patterns (241),
wherein the third electrode (230), the plurality of second patterns (241), and the first bridge pattern (212) are located in a first layer (SU202), and
wherein the plurality of first patterns (211), the second electrode (220), and the second bridge pattern (242) are located in a second layer (SU204) different from the first layer (SU202).

14. The electronic device of any preceding claim, wherein the sensor layer (200) further comprises:
a plurality of first dummy patterns (DPS1) overlapping with the third electrode (230), and surrounded around by the first electrode (210); and
a plurality of second dummy patterns (DPS2) overlapping with the fourth electrode (240), and surrounded around by the second electrode (220).
